(19) Europäisches Patentamt
European Patent Office
Office européen des brevets

(11) **EP 2 592 559 A1**

(12) **EUROPEAN PATENT APPLICATION**
published in accordance with Art. 153(4) EPC

(43) Date of publication:
**15.05.2013 Bulletin 2013/20**

(51) Int Cl.:
***G06F 12/00*** (2006.01)

(21) Application number: **11803352.1**

(22) Date of filing: **02.02.2011**

(86) International application number:
**PCT/JP2011/052097**

(87) International publication number:
**WO 2012/005016 (12.01.2012 Gazette 2012/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.07.2010 JP 2010155333**

(71) Applicant: **Hitachi, Ltd.**
**Chiyoda-ku**
**Tokyo 100-8280 (JP)**

(72) Inventors:
- **FUJII Yasuhiro**
  **Yokohama-shi**
  **Kanagawa 244-0817 (JP)**
- **SERITA Susumu**
  **Yokohama-shi**
  **Kanagawa 244-0817 (JP)**

- **KAI Satoshi**
  **Yokohama-shi**
  **Kanagawa 244-0817 (JP)**
- **MURAKAMI Takao**
  **Yokohama-shi**
  **Kanagawa 244-0817 (JP)**
- **NAKANO Takahiro**
  **Yokohama-shi**
  **Kanagawa 244-0817 (JP)**

(74) Representative: **Calderbank, Thomas Roger et al**
**Mewburn Ellis LLP**
**33 Gutter Lane**
**London**
**EC2V 8AS (GB)**

(54) **METHOD OF CALCULATING FEATURE-AMOUNT OF DIGITAL SEQUENCE, AND APPARATUS FOR CALCULATING FEATURE-AMOUNT OF DIGITAL SEQUENCE**

(57)     The use of the known feature amounts results in a low level of accuracy in finding similar files. To deal with this problem, the similar file determination process of this invention involves dividing a file, while at the same time changing a file dividing condition, and repeating this dividing operation until the total number of divided pieces of data exceeds a predetermined number. For each of the divided pieces of data thus obtained a hash value is calculated and all the hash values are output.

FIG.4

EP 2 592 559 A1

**Description**

INCORPORATION BY REFERENCE

This application claims the priority benefit of Japanese Patent Application No. 2010-155333, filed on July 8, 2010, the entire descriptions of which are incorporated herein by reference.

TECHNICAL FIELD

The present invention relates to a method and apparatus for calculating from digital sequences feature quantities that take similar values among similar digital sequences, such as electronic files.

BACKGROUND ART

There have been great demands for a capability of finding quickly and highly precisely similar files, as when removing redundant or overlapping data in storages or searching for similar files in PCs and servers. As one method for calculating feature quantities of electronic files and the like used in such search operations, a "fuzzy hashing" (also called "similarity hashing") has been known.

The fuzzy hashing is characterized in that (1) it allows for similarity check among electronic files and (2) produced sizes of hash values are small and fixed. That is, (1) unlike ordinary hash functions which, when there is a change of even one bit to the content of a file, result in a significant change to a hash value, the fuzzy hashing produces a hash value that depends on a degree of change made to the file; and (2) it produces hash values of a fixed length, which is smaller than index information generated by common search engines.

Some known examples of conventional techniques associated with the fuzzy hashing include Patent Literature 1 and Non Patent Literature 1. Both of these methods determine a fuzzy hash by dividing a digital sequence such as an electronic file, applying an ordinary hash function to each of the divided pieces of data to calculate a hash value, and linking together the hash values obtained. With a fuzzy hash determined in this way, even if a part of a file is changed, the fuzzy hash will not change significantly because the hash values of the other unaltered, divided pieces of data remain unchanged. As a result, the fuzzy hashes of similar files will have similar values.

CITATION LIST

PATENT LITERATURE

Patent Literature 1: U. S. Patent No. 7,272,602

NON PATENT LITERATURE

Non Patent Literature 1: Jesse Kornblum: "Identifying almost identical files using context triggered piecewise hashing", Digital Investigation 3 S (2006) pp. 91-97.

SUMMARY OF INVENTION

TECHNICAL PROBLEM

The conventional techniques described in Patent Literature 1 and Non Patent Literature 1 both calculate a fuzzy hash in the following manner.

(Step 1) A digital sequence is scanned from its starting end one byte at a time and a predetermined operation is performed on scanned data strings near a current scanning point to calculate a value. This operation is carried out for each scanning point.

(Step 2) When a calculated value corresponding to a given scanning point exceeds a predetermined threshold, that scanning point is taken as a dividing point at which to divide the digital sequence.

(Step 3) When the scan has reached the tail end of the sequence, the number of divided pieces of data separated from one another (hereinafter referred to as the number of partitions) by the dividing points, is counted. To ensure that fuzzy hashes have a fixed length, the number of partitions must be close to a predetermined fixed value (hereinafter referred to as an output partition number). If the number of partitions is remote from the output partition number, the fuzzy hash calculation process adjusts the threshold before returning to step 2. If not, the process proceeds to step 4.

(Step 4) When a desired partition number is obtained, the process divides the digital sequence at these dividing points and calculates a hash value for each partition or divided pieces of data (hereinafter referred to as a "partition hash" to distinguish it from a fuzzy hash). The partition hashes thus obtained are linked together to produce a fuzzy hash.

That is, with the conventional technique it is necessary to adjust the threshold so that the partition number comes close to the output partition number. The reason that the file is not divided simply at equal intervals of a predetermined fixed length is that, if the digital sequence in a certain partition or divided piece of data is expanded even by 1 bit, as a result of editing or modification, the positions of dividing points in the sequence following that partition shift, resulting in a loss of match in divided position between the original sequence before the modification and the modified one, which in turn will cause the value of the fuzzy hash to change significantly.

However, calculating a fuzzy hash for a digital sequence that has been expanded to some extent by editing, based on the method described in Patent Literature 1 and Non Patent Literature 1, will highly likely produce a threshold that is different from the one used before editing because the conventional method attempts to adjust the threshold to make the partition number approximate the output partition number. Once the threshold is changed, the way in which the file is divided becomes drastically different, with the result that a fuzzy hash thus produced will no longer be near the value of the fuzzy hash of the original file.

In summary, the conventional technique has a problem that if a threshold is altered as a result of file expansion, a digital sequence similarity check can no longer be made correctly using fuzzy hashes.

SOLUTION TO PROBLEM

To solve the aforementioned problem of the conventional techniques associated with a change in threshold, this specification discloses a method which, rather than adjusting the number of partitions by changing the threshold, divides a digital sequence with a variety of different thresholds to produce a set of partition hashes and outputs them in a number not exceeding the output partition number as a fuzzy hash. Since the fuzzy hash thus produced includes partition hashes of data pieces divided by a variety of different thresholds, even if the threshold is changed as a result of file modifications, as long as the changed threshold is included in a set of thresholds of the original file before modification, the two fuzzy hashes will not take drastically different values.

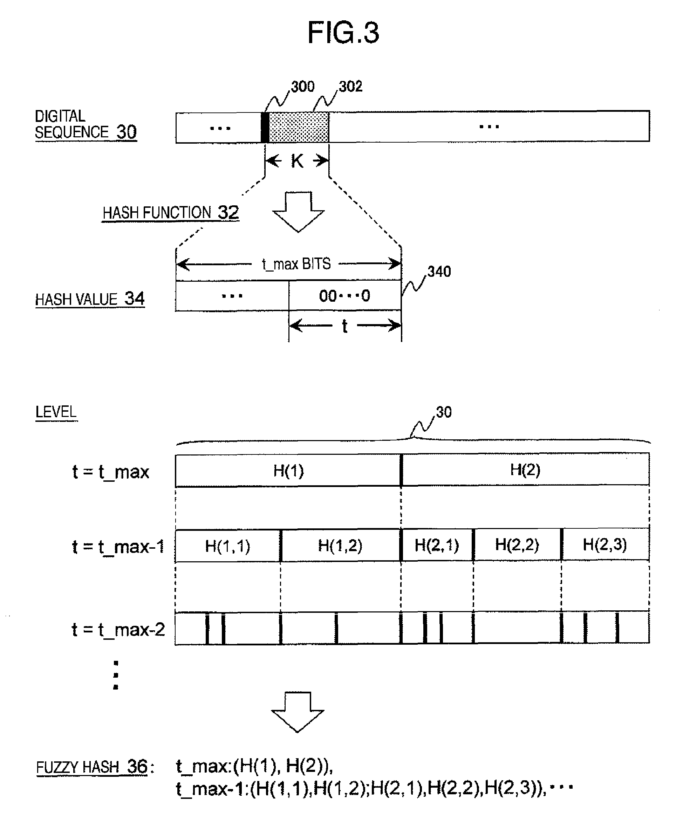

To describe in more detail, dividing points are determined by a threshold that produces the least number of partitions (the threshold is hereinafter referred to as a "level" which will be defined by referring to Fig. 3). Next, the level is lowered by one so as to increase the number of partitions and dividing points are determined using the lowered level. The similar operation is repeated until the number of partitions exceeds the output partition number. Partition hashes are calculated for individual divided pieces of data and are then linked together and output as a fuzzy hash. This method is disclosed as a first aspect of this invention.

With the conventional techniques described in Patent Literature 1 and Non Patent Literature 1, since only a set of partition hashes belonging to the lowest level is output as a fuzzy hash, if a file is modified resulting in a set of partition hashes at its lowest level being changed, a correct distance between two fuzzy hashes cannot be calculated.

To deal with this problem, the method of this invention first compares two sets of fuzzy hash levels and calculates a distance between two sets of partition hashes belonging to the lowest of common levels. Unlike the conventional techniques, this method compares the fuzzy hashes at the same level and therefore can correctly calculate the distance between them. This method is disclosed as a second aspect of this invention.

Finding common partition hashes at each level generally requires many computations. Therefore, taking advantage of the fact that the higher the level, the lower the likelihood will be of a dividing point occurring, this invention finds matching portions, starting from the highest level where the number of partitions is smallest and moving one level down at a time, to reduce as many partition hashes to be compared as possible to reduce the calculation volume. This method is disclosed as a third aspect of this invention.

Further, the conventional techniques have introduced a concept of a threshold to keep constant the output sizes of fuzzy hashes regardless of file size. The requirement of keeping the size of fuzzy hashes to a fixed length is in itself a restraint intended to avoid fuzzy hashes imposing onerous burden on the storage capacity. Thus there may be cases where this requirement may be excluded, as when the storage capacity is sufficiently larger than files to be stored. In that case, the size of feature quantity can be increased in proportion to the file size and, because of increased volume of information on the feature quantity, the similarity check accuracy can be expected to improve.

Therefore, the method of calculating a fuzzy hash whose output size depends on a file size, a similar file search method and an apparatus to implement these methods are disclosed as a fourth aspect of this invention that solves the problem with the conventional techniques.

The above aspect allows fuzzy hashes of even those files, for which similarity judgment cannot be made by the conventional techniques described in Patent Literature 1 and Non Patent Literature 1, to assume close values, raising the possibility of similarity judgment being made correctly. In more detail, this aspect makes it possible to search similar files in PCs and servers more precisely than the conventional techniques. Further, this aspect also enables redundant or overlapping portions in a file in a storage to be found more reliably. Erasing the overlapping or redundant portions before storing can reduce the storage capacity required more than can the conventional techniques.

ADVANTAGEOUS EFFECTS OF INVENTION

This invention raises the possibility that a similarity judgment can be made correctly of even those files for which similarity judgment cannot be made by the conventional techniques. Other objects, features and advantages of this invention will become more apparent from the following descriptions taken in conjunction with the accompanying drawings.

BRIEF DESCRIPTION OF DRAWINGS

Fig. 1 is a block diagram representing a hardware configuration of a digital sequence feature amount calculation apparatus.
Fig. 2 shows an example configuration of a fuzzy hash calculation unit.
Fig. 3 shows an example method of calculating a fuzzy hash.
Fig. 4 shows an example flow chart representing a sequence of steps executed by the digital sequence feature amount calculation method.
Fig. 5 shows an example flow chart representing a dividing point calculation method.
Fig. 6 shows an example method of storing a fuzzy hash.
Fig. 7 shows an example configuration of a distance calculation unit.
Fig. 8 shows an example of distance calculation using fuzzy hashes.
Fig. 9 shows an example of distance calculation using fuzzy hashes.
Fig. 10 shows an example flow chart for the method of calculating a distance between fuzzy hashes.
Fig. 11 shows an example configuration of a distance storage unit.
Fig. 12 shows an example configuration of a file search unit.

DESCRIPTION OF EMBODIMENTS

Embodiments of the present invention will be described by referring to accompanying drawings.

EMBODIMENT 1

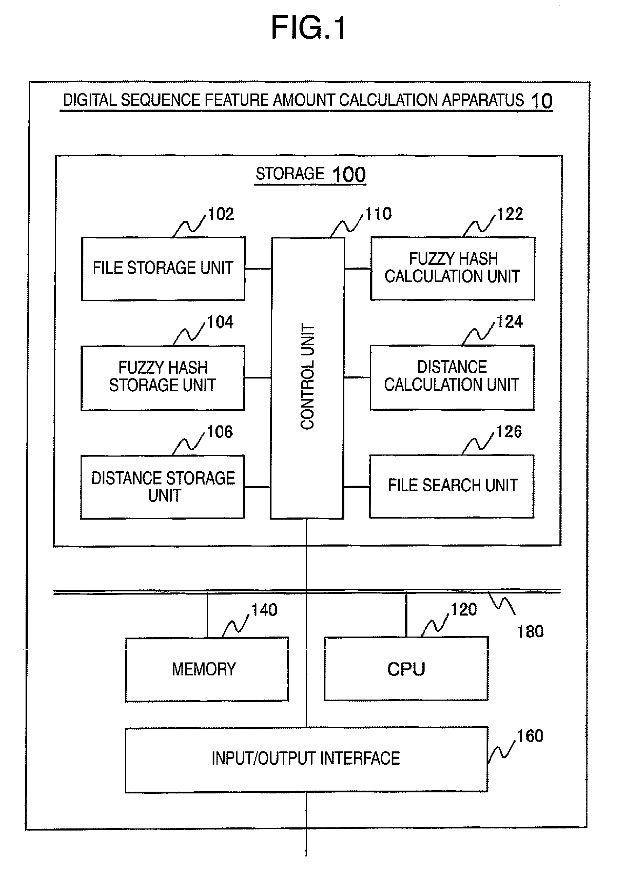

Fig. 1 shows an example hardware configuration of a digital sequence feature amount calculation apparatus 10.
The digital sequence feature amount calculation apparatus 10 is configured to have a storage 100 in which to store digital sequences such as electronic files and programs, a CPU 120 to perform a variety of computations, a memory 140 in which to temporarily store data for computation, and an input/output interface 160 for user dialog devices such as keyboard, mouse and display, all connected to an internal signal line 180 or hub. The storage 100 includes storage media such as hard drives, flash memories and RAIDs.
The digital sequence feature amount calculation apparatus 10 has, as in PCs and servers, a CPU 120 and a memory 140 and may be mounted as one function that runs on PCs and servers.
The storage 100 has processing units, such as a file storage unit 102, a fuzzy hash storage unit 104, a distance storage unit 106, a control unit 110, a fuzzy hash calculation unit 122, a distance calculation unit 124 and a file search unit 126.
In the digital sequence feature amount calculation apparatus 10, the file storage unit 102 stores electronic files, on which the user can perform operations, in low-level blocks that are managed by a block IO. In descriptions that follow, byte strings in electronic files stored in the file storage unit 102, together with a concept of blocks, are referred to as a "digital sequence." Unless otherwise specifically noted, a word "electronic file" also implies a digital sequence.
The fuzzy hash calculation unit 122 calculates a fuzzy hash for an electronic file stored in the file storage unit 102. The calculated fuzzy hash is stored in the fuzzy hash storage unit 104. The distance calculation unit 124 calculates a similarity (distance) between files by using fuzzy hashes stored in the fuzzy hash storage unit 104 and stores it in the distance storage unit 106. The file search unit 126 looks for similar files by using distance information stored in the distance storage unit 106.
To ensure fast computation on similar files, the method of this embodiment calculates distances between fuzzy hashes in advance and stores them in the distance storage unit 106. The control unit 110 sends files stored in the file storage unit 102 successively to the fuzzy hash calculation unit 122 and also forwards the fuzzy hashes stored in the fuzzy hash storage unit 104 one after another to the distance calculation unit 124, thereby determining distances for all combinations of files and updating the distance storage unit 106.

The processing units 110, 122, 124, 126 in the storage 100 are implemented by the CPU 120 executing programs stored in the memory 140. The programs may be stored in the memory 140 beforehand or loaded into the memory 140 from other devices through the input/output interface 160 and media that can be used by the computer. The media, for example, refer to removable storage media that can be connected to or disconnected from the input/output interface, or communications media (e.g. wired, wireless or optical networks, or carrier waves and digital signals propagating on the networks).

The programs implementing these processing units 110, 122, 124, 126 may be stored in a read-only memory (ROM) not shown, rather than in the rewritable storage 100.

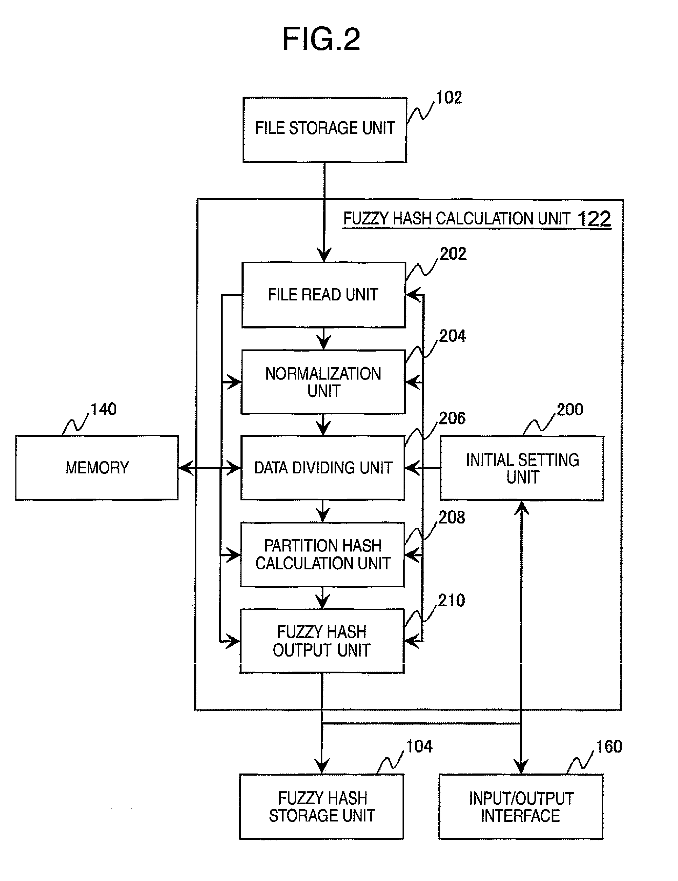

Now, referring to Fig. 2 through Fig. 12, detailed explanations will be made of devices illustrated in Fig. 1 and of the digital sequence feature amount calculation method implemented by a combination of these devices.

Fig. 2 shows an example of a functional configuration of the fuzzy hash calculation unit 122.

The fuzzy hash calculation unit 122 has a file read unit 202 to read an electronic file from the file storage unit 102, a normalization unit 204 to eliminate information not necessary for the fuzzy hash calculation from the read file, a data dividing unit 206 to divide the normalized file, a partition hash calculation unit 208 to calculate a hash value for each of the divided data pieces and a fuzzy hash output unit 210 to output a set of the partition hashes obtained. The fuzzy hash calculation unit 122 also has an initial setting unit 200 to make settings such as parameters associated with the processing units 202, 204, 206, 208, 210.

In the calculation of fuzzy hashes, the processing units 200, 202, 204, 206, 208, 210 temporarily store data in the memory 140 for its checking, editing or removal.

The fuzzy hashes produced by the fuzzy hash calculation unit 122 are stored in the fuzzy hash storage unit 104 by the fuzzy hash output unit 210. Alternatively they may be presented to the user on a display through the input/output interface 160.

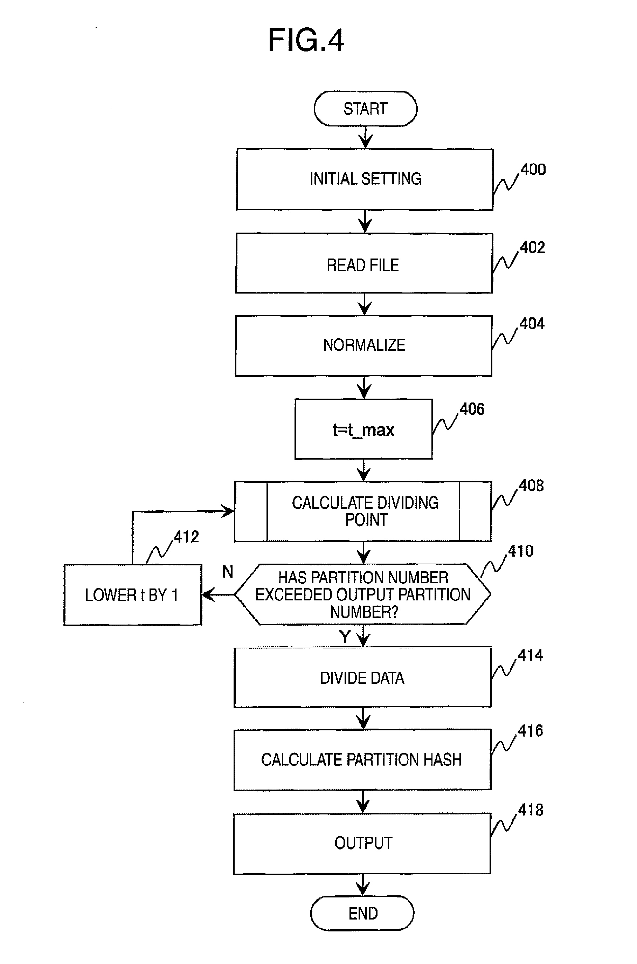

Before proceeding to give detailed explanation on operation of devices of Fig. 2 by referring to Fig. 4, we will describe an outline of the fuzzy hash calculation method of this invention by using Fig. 3 in order to clarify differences between the present invention and the conventional technique.

In this embodiment and the conventional technique, a fuzzy hash for a digital sequence 30 such as an electronic file is produced by scanning the digital sequence 30 from the starting point one byte at a time to extract a partition sequence 302 of K bytes beginning at a scan point 300. K is a small value, e.g. 7 in Non Patent Literature 1. The same value may also be taken in this embodiment.

Next, the data string 302 is fed into a hash function 32 to calculate a hash value 34. Patent Literature 1 and Non Patent Literature 1 adopt a fast hash function 32 called a "rolling hash."

The reason why the rolling hash is employed as the hash function 32, rather than a method that, for example, simply adds up bytes in the data string 302, is that the latter simple method depends greatly on how bytes of the digital sequence 30 are arranged, giving rise to a possibility of similar hash values 34 recurring one after another. Since the dividing point is determined according to the hash value 34, as described later, if similar hash values recur successively, there is likely to be a bias to the arrangement of dividing points, i.e., the manner in which the sequence is divided. Because the fuzzy hash is produced by determining a partition hash for each of divided pieces of data and linking together the partition hashes, if the digital sequence is changed in only one portion and if the dividing points happen to concentrate in that portion, it will have a significant effect on the fuzzy hash. To get around this problem, the hash function 32 is used to divide the digital sequence at as equal an interval as possible. As described in a literature cited below, the rolling hash is known to be a function capable of hashing the values of a digital sequence at high speed. This is why the rolling hash is adopted by Patent Literature 1 and Non Patent Literature 1.

Richard M. Karp and Michael O. Rabin: "Pattern-matching algorithms", IBM Journal of Research and Development, 31(2) pp. 249-260, 2987.

In the conventional method, a hash value 34 is calculated for each scan point 300 and a threshold is adjusted so that a predetermined number of partitions can be extracted using the hash values. To describe details of the method mentioned in Non Patent Literature 1, t least significant bits or endmost bits 340 are extracted from the hash value 34 of t_max bit and, if these extracted bits are all zeros, the scan point 300 is regarded as a dividing point. Here t_max refers to the number of bits required to represent a maximum possible value that the hash value 34 can take. The rolling hash in Non Patent Literature 1 produces a 32-bit hash value 34, so t_max is 32.

Suppose the hash function 32 can completely randomize a digital sequence 30 so that the probability of occurrence of the hash value 34 is uniform. Since the probability of all of the t endmost bits of the hash value 34 becoming zeros is $1/2^t$, the value of t can then be determined by the following equation.

$$(\text{length of digital sequence 30}) \times 1/2^t = (\text{output partition number}) - 1.$$

In practice, however, the original digital sequence 30 can be randomized only to some extent by the hash function 32, so the value of t often differs from the value calculated from the above equation. The technique shown in Non Patent Literature 1 therefore changes t until the number of partitions almost matches the output partition number.

Patent Literature 1 also divides a digital sequence 30 in almost the same way. In the following description, t is called a "level".

As described above, the conventional method adjusts the level so that the number of partitions matches the output partition number. So, if the level changes as a result of modification of a file, a fuzzy hash will become drastically different, giving rise to a problem that the produced fuzzy hash is unable to be used for similarity check. In dealing with this problem, it is an aspect of this embodiment to produce partition hashes for as many levels as possible.

More specifically, the first step is to set the level to t_max and determine dividing points. A point at which all of the hash value 34 are zeros is taken as a dividing point. The possibility of such a hash value being produced is low and therefore the number of resultant dividing points is also small. In the example of Fig. 3, only one dividing point is obtained for level t_max.

Next, the level is lowered by one to t_max-1 and the similar step is taken to determine another dividing point. It is noted here that the point 300, which has been picked up as the dividing point for the level t_max is also selected as a dividing point for the lower level t_max-1. This is obvious from the definition of the level that if all of the t endmost bits of the hash value are zeros, the scan point in question is taken as a dividing point. In the example of Fig. 3, it is seen that four dividing points are obtained for level t_max-1.

The similar operation is repeated until the total number of partitions for all levels reaches the output partition number. For each of the divided pieces of data thus obtained, a partition hash is calculated to output a fuzzy hash 36. This is a first aspect of this embodiment.

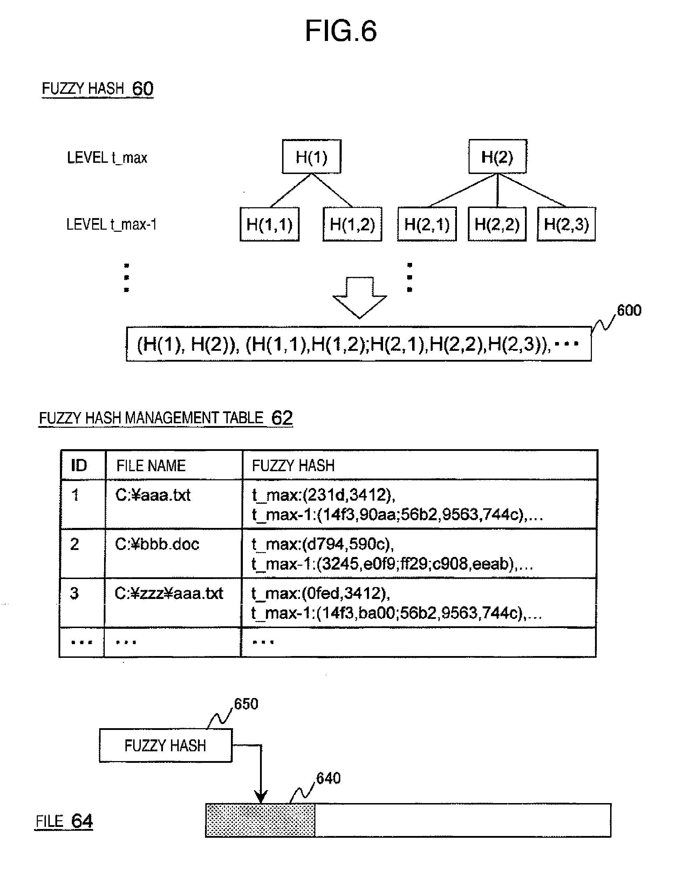

The fuzzy hash under consideration includes various levels of divided pieces of data, so that even if the level changes as a result of a file modification, as long as the divided data pieces of interest are included in a set of data pieces at a level prior to the file modification, the fuzzy hashes being compared do not assume totally different values. This embodiment therefore can be said to excel in similarity check accuracy, when compared to the conventional method which, in the event of a level change, may result in the fuzzy hash being unable to function correctly. More detailed description of the method of outputting and storing fuzzy hashes 36 will be given by referring to Fig. 6.

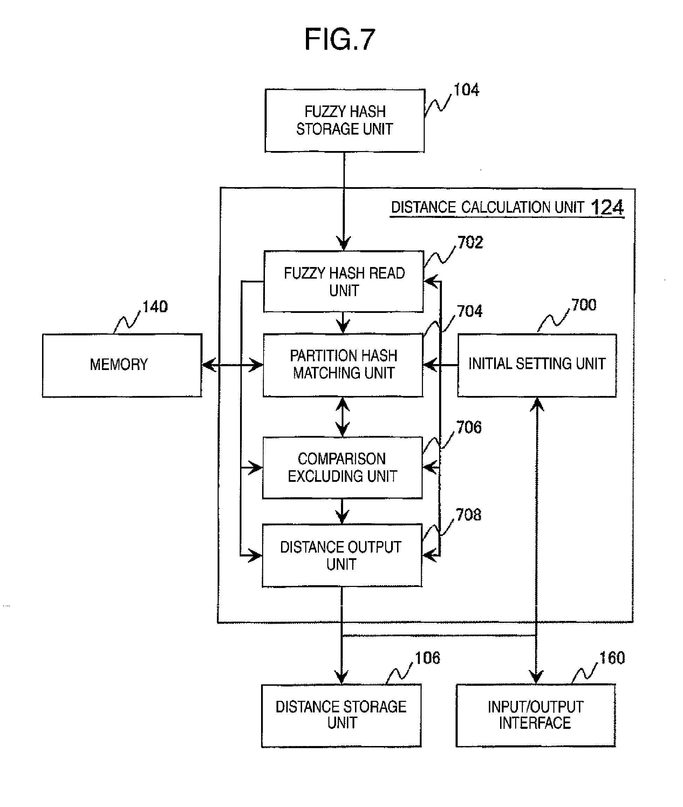

Further, by taking advantage of the characteristic fact that dividing points at one level always become dividing points at lower levels, the similarity check using fuzzy hashes can be speeded up. The similarity checks utilizing this feature are second and third aspect of this embodiment, which will be described later referring to Figs. 7, 8 and 9.

Now that the difference between this embodiment and the conventional technique has been clarified, a fuzzy hash calculation flow of Fig. 4 will be explained by looking at the associated operation of the devices shown in Fig. 2.

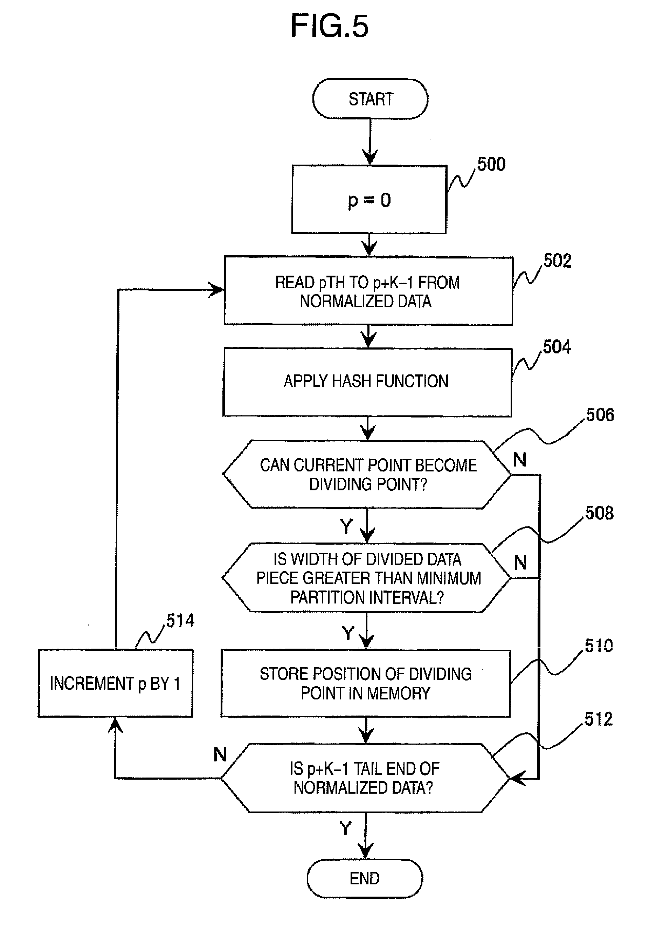

(Step 400) The initial setting unit 200 sets parameters for processing units 202, 204, 206, 208, 210, for example, an output partition number. Further, as described later by referring to Fig. 5, if the interval between dividing points determined by the hash function 32 is too short, any file modification can have too great an effect on a fuzzy hash. So, the minimum value of the interval between candidate points to be adopted as the dividing points are also set by the initial setting unit 200. This value is referred to as a "minimal partition interval".

Further, the initial setting unit 200 sets miscellaneous parameters such as K in Fig. 3 and selects a fuzzy hash output method. It can also select the type of a file to be processed for fuzzy hash, and its file extension.

The user can set the aforementioned items through the initial setting unit 200. Conversely, the initial setting unit 200 allows the user to fix a part of the setting items to prevent it from being changed.

Those items set or fixed by the initial setting unit 200 are notified, as required, by the unit 200 to the associated processing unit through the memory 140 or storage 100.

(Step 402) The file read unit 202 reads files stored in the file storage unit 102. The file reading may be done when the file read unit 202 monitoring the file storage unit 102 detects a file being stored into the file storage unit 102 or when a new file is created. It is also possible to crawl the file storage unit 102 and successively read all files stored there. Or in response to an instruction from the user through the input/output interface 160, the file read unit 202 may read a set of files specified by the user.

In either case, when a fuzzy hash is calculated from the file read in according to the steps shown in Fig. 4, distances of the calculated fuzzy hash to other fuzzy hashes are computed, updating the distance storage unit 106. A sequence of these steps is controlled by the control unit 110.

The file read unit 202 may also read blocks at lower levels, rather than electronic files, through a block IO.

The file read unit 202 temporarily stores in the memory 140 a file read in or a block read in through the block IO as a digital sequence and calls up a normalization unit 204 .

The destination in which a digital sequence is to be stored may be a storage 100. In the following description, the word "memory 140", whenever it appears, also implies the storage 100.

The call-up operation may involve starting a processing unit in the called-up device (when the device of interest is already running, no action is taken) to notify the processing unit of the destination device in which the digital sequence saved in the memory 140 is to be stored. It may also be possible to send the digital sequence per se to the processing unit in the called-up device. In the following, the call-up operation implies what is mentioned above.

(Step 404) The normalization unit 204 removes from the digital sequence on the memory 140 information not necessary for calculation of fuzzy hash. More specifically, it extracts only text information from the digital sequence and performs shaping operations on the text, such as removing blanks and eliminating irregularities or unevenness among characters or words for more unified form or consistency. For details of such normalization operations, see a pamphlet of international publication No. WO2006/122086.

The normalization unit 204 and the step 404 are not essential in this embodiment. That is, with the method and apparatus of this embodiment allow a fuzzy hash to be calculated directly from a digital sequence without having to extract text information from the digital sequence and shape it.

The normalization unit 204 temporarily stores the normalized data in the memory 140 and calls up the data dividing unit 206. If the fuzzy hash calculation unit 122 does not include the normalization unit 204, it temporarily stores in the memory 140 the data that the file read unit 202 has read in before calling up the data dividing unit 206. In the description that follows, data on the memory 140 that are to be read by the data dividing unit 206 are referred to as "normalized data".

(Step 406) To divide the normalized data on the memory 140, the data dividing unit 206 sets the level t to t_max and temporarily stores this value in the memory 140. Here, t_max is, as explained with reference to Fig. 3, the number of bits required to represent a maximum value of the hash value 34, and is a fixed value that depends on the hash function 32. Finding dividing points successively from the level t_max is one of the characteristics of this embodiment.

(Step 408) The data dividing unit 206 determines dividing points on the normalized data in the memory 140 for the level t. That is, for each point of the normalized data, K-byte data with its head located at that point is put into the hash function 32. Any point at which all the t endmost bits of the resultant hash value 34 are zeros is taken as a dividing point. Here, K is the number of bytes required to produce the hash value 34 explained in Fig. 3. More detailed explanation on the method for calculating dividing points will be given later referring to Fig. 5. The data dividing unit 206 temporarily saves a set of dividing points obtained in the memory 140.

(Step 410) The data dividing unit 206 calculates the number of partitions from the set of dividing points determined by step 408 and checks whether the total number of partitions for each level exceeds the output partition number. If the output partition number is not exceeded, the processing moves to step 412 where it lowers the level t by one before repeating the operation from step 408 onward. If the total number of partitions for a particular level is in excess of the output partition number, the processing ends the dividing point determination operation before proceeding to step 414.

(Step 414) After dividing points have been determined by the processing of step 408 to step 412, the data dividing unit 206 divides the normalized data based on a set of the dividing points and temporarily stores a set of the divided pieces of data in the memory 140, after which it calls up the partition hash calculation unit 208.

(Step 416) The partition hash calculation unit 208 computes a partition hash for each of the divided data pieces on the memory 140. The calculation of the partition hashes may be done by, for example, a commonly used hash function mentioned in the following literature.

R. Rivest: "The MD5 Message - Digest Algorithm", RFC 1321, April 1992.
The partition hash calculation unit 208 temporarily stores in the memory 140 a set of partition hashes calculated for each of the associated divided pieces of data and then calls up the fuzzy hash output unit 210.

(Step 418) The fuzzy hash output unit 210 determines a fuzzy hash from the set of partition hashes on the memory 140. At a stage of executing step 414, there is a possibility that the total number of partitions may be larger than the output partition number set by the initial setting unit 200. So, if the fuzzy hash is output as is, its length may be greater than is desired. In that case, the fuzzy hash output unit 210 adjusts the output size of the fuzzy hash either by omitting only excess partition hashes or discarding all partition hashes in a lowermost level set.

When this kind of omission is adopted, the omission processing may be done by the data dividing unit 206 at step 414. This offers an advantageous effect of reducing the amount of calculation performed by the partition hash calculation unit 208.

Although the fuzzy hash may increase in length, its length will not increase significantly. So, the fuzzy hash output unit 210 may be configured to output the excess partition hashes, rather than discarding them.

As a more effective output size adjusting method there has been known a method using the "Bloom filter". The Bloom filter is a probabilistic data structure with good spatial efficiency and used to find out whether an element is a member of a particular set. Although it has a drawback that as the number of elements added to a set increases, the possibility of falsely determining elements not included in the set as belonging to that set increases, the Bloom filter can reduce the size of the set. In the following, the method of adjusting an output size based on the Bloom filter will be described in detail.

The Bloom filter is a bit sequence. Suppose its length is N. At step 418 the fuzzy hash output unit 210 groups the partition hashes obtained at step 416 by level and generates one or more Bloom filters for each level according to the method described below. After generating Bloom filters for all levels, the fuzzy hash output unit 210 links them together to produce a fuzzy hash before outputting it.

The Bloom filter is generated as follows. First, a bit sequence (Bloom filter) of a length N is prepared and all bits of the sequence are set to zeros. Further, k hash functions are prepared each of which, when data of an arbitrary length is entered, produces a value in a range from 0 to N-1. These hash functions produce k different hash values from the same data and have a different purpose from those of the hash function 32 (rolling hash) and partition hashes explained in Fig. 3. To avoid confusion, these hash functions are referred to as "Bloom hash functions". It is noted that k different Bloom hash functions can be provided, as by employing k different algorithms or making their initial values different.

Next, the fuzzy hash output unit 210 selects one of the levels and, from among the set of partition hashes calculated by step 416, chooses one partition hash belonging to the selected level. Then, the fuzzy hash output unit 210 applies the k Bloom hash functions to the chosen partition hash to produce k output values ($A\_1, A\_2, ..., A\_k$). The fuzzy hash output unit 210 changes to 1 the values of Bloom filter bits at those positions corresponding to the k output values obtained (those bits in the sequence whose addresses are represented by $A\_1, A\_, ..., A\_k$). In the following, this operation to change bit values of the Bloom filter based on the partition hash is referred to as a "registration of partition hash".

Next, the fuzzy hash output unit 210 selects from among the set of partition hashes calculated by step 416 another partition hash belonging to the selected level and performs the partition hash registration on it. Here, there is a possibility that, of those k bits in the Bloom filter that this round of partition hash registration is going to change, some may have already been changed to 1. In that case, their values are left unchanged at 1.

In the following steps, the fuzzy hash output unit 210 applies the partition hash registration to all the remaining partition hashes belonging to the selected level in the set of the partition hashes calculated by step 416. As a result, a Bloom filter is produced which has a part of its bit sequence changed to 1. Described above is the method of generating a Bloom filter corresponding to the selected level.

With the aforementioned Bloom filter generating method, the memory size required to represent a set of partition hashes belonging to one level can be made N bits.

By evaluating commonality of Bloom filters generated from different sets of partition hashes (as by counting the number of bits whose values match), it is possible to estimate how much the registered sets of partition hashes have in common. This is because the same partition hashes, when registered, will result in the bit values at the same positions in Bloom filters becoming 1. However, there is a possibility that, even when different partition hashes are registered, the bit values at the same positions in Bloom filters may also become 1. Generally the possibility of a false assessment will increase with the number of partition hashes registered in one Bloom filter. This possibility of false assessment may be reduced as by making the size of Bloom filter N large, or using a plurality of Bloom filters for one level (i.e., creating a new Bloom filter for registration when the number of registered partition hashes exceeds an upper limit).

A fuzzy hash, the final output, can be made smaller in size by reducing the value ofN. As described above, however, there is a tradeoff between the accuracy in finding similarity between Bloom filters and the compactness in size of Bloom filters. So, in using Bloom filters, the value ofN needs to be determined beforehand at step 400, taking the required precision and the calculation resources into account.

For the Bloom filter described above, see the following literature.

B. Bloom: "Space/Time Tradeoffs in Hash Coding with Allowable Errors", Communications of the ACM 13:7, pp. 422-426, 2970.

The fuzzy hash output unit 210 outputs to the fuzzy hash storage unit 104 and/or the input/output interface 160 the fuzzy hash that has been obtained either by discarding an excess, outputting the fuzzy hash without discarding the excess or using a Bloom filter. It is noted, however, that because the comparison between fuzzy hashes requires finding common partition hashes for each level, the fuzzy hashes are output in a manner that makes clear which level the partition hashes belong to. It is also possible to allow the user to choose, through the initial setting unit 200, a desired method - either discarding an excess, outputting a fuzzy hash without discarding the excess or using Bloom filters.

With the above steps taken, the fuzzy hash calculation process is complete.

While at step 406 the level t has been set to the highest of the levels that the hash function 32 can determine, $t\_max$, it is also possible to set the level t to lower than $t\_max$ and start dividing the normalized data from that level. The starting level is set by the initial setting unit 200 at step 400.

Conversely, the level t may be set greater than $t\_max$. At this level the normalized data is not divided, so the partition hash belonging to the highest level of the fuzzy hash is always the normalized data's own partition hash. In this case, if the level t is higher than $t\_max$, the data dividing unit 206 at step 408 may not execute the dividing point calculation operation but immediately proceed to step 410 by taking the partition number at level t as 1 (i.e., there is no dividing point). These operations are instead done by the initial setting unit 200 at step 400.

In the following description, the level t_max implies not only the highest level determined by the hash function 32 but also levels that are lower or higher than the highest level set by the initial setting unit 200.

Next, referring to Fig. 5 as well as Fig. 3, the detailed operation flow of step 408 of Fig. 4 will be explained in connection with the associated operations of the devices shown in Fig. 2.

(Step 500) The data dividing unit 206 scans the normalized data on the memory 140 from the normalized data starting point one byte at a time to calculate dividing points on the normalized data. It sets the scan position p at 0 and temporarily saves this value in the memory 140.

(Step 502) The data dividing unit 206 reads the normalized data from pth piece of data up to (p+K-1)th. Here K represents the number of bytes required to determine the hash value 34 explained in Fig. 3 and is set by the initial setting unit 200 at step 400 of Fig. 4.

The data dividing unit 206 feeds the K bytes of data read in into the hash function 32 of Fig. 3 to produce hash values 34. It then temporarily store the hash values 34 obtained in the memory 140.

The hash function 32 may be a rolling hash described in Patent Literature 1 and Non Patent Literature 1 or any other kind of function. The user may set a desired function through the initial setting unit 200.

(Step 506) The data dividing unit 206 checks t endmost bits of the hash value 34 of interest to see if all of these bits are zeros. If all of them are zeros, the data dividing unit 206 takes p as a dividing point candidate and temporarily saves the value of p before moving to step 508. If not, the unit 206 jumps to step 512.

The condition for determining the dividing point does not need to be limited to the one in which the t endmost bits are all 0's. In essence, the only requirement is whether t bits extracted according to a predetermined rule match a preset bit sequence. For example, if a rule is adopted that a point under consideration is taken as a dividing point only when t most significant bits or foremost bits are 0101..., a decision on whether the point of interest is a dividing point need only be made according to that rule. Such a rule is set by the initial setting unit 200.

(Step 508) The data dividing unit 206 compares the dividing point candidate p determined by step 506 with a point p0, that was last stored in the memory 140 at step 510, to calculate an interval p-p0. If p0 does not exist, the head of the normalized data on the memory 140 is used instead (p0 = 0).

If this interval is greater than a minimum partition interval determined beforehand by the initial setting unit 200, p is taken as a dividing point and the processing moves to step 510. If not, the data dividing unit 206 decides that p cannot be regarded as a dividing point, and jumps to step 512.

(Step 510) the data dividing unit 206 adds p to a set of dividing points and temporarily stores the dividing point set in the memory 140.

(Step 512) If p+K-1 is located at the tail end of the normalized data, the data dividing unit 206 decides that the normalized data has all been scanned and exits the processing. If not, the data dividing unit 206 moves to step 514 where it increments p by 1, before repeating the process from step 502 onward.

If at step 508 the data dividing unit 206 determines p to be a dividing point, the position where the next dividing point will occur is beyond the minimum partition interval d added to p. So, step 514 may increment p by d, instead of 1. In that case, step 512 checks whether p+K+d-1, not p+K-1, is located at the end of the normalized data.

With the above operations done, the processing of step 408 is complete.

Now, the detailed method of outputting and storing the fuzzy hash thus obtained will be explained by referring to Fig. 6 as well as Fig. 1, Fig. 2 and Fig. 3.

As explained in Fig. 3, dividing points at one level always become dividing points at lower levels and each of divided pieces of data is divided into a plurality of pieces of data at lower levels. Therefore, as shown in Fig. 6 the fuzzy hash 60 disclosed in this application can be said to have a tree-structured feature quantity. In Fig. 3, for example, the divided data piece represented by a partition hash H(1) at level t_max is subdivided into two pieces H(1,1) and H(1,2) at level t_max-1. Then, as shown in Fig. 6, H(1) can be regarded as having child nodes H(1,1) and H(1,2). Similarly, the partition hash H(2) at level t_max has child nodes H(2,1), H(2,2) and H(2,3).

The fuzzy hash output unit 210 of Fig. 2 may output a tree-structured fuzzy hash 60 as is or have it expressed in the form of a sequence. As a method of outputting the fuzzy hash in the form of a tree structure as is, an XML, a language capable of describing contents in a tree structure, may be used. Methods for expressing the tree-structured contents in a sequence form include one which involves, for example, parenthesizing the entire partition hashes at level, putting an indication at the head of the parentheses showing which level the parenthesized partition hashes belong to, and, in each pair of parentheses, distinguishing between partition hashes belonging to different parents by a semicolon; and one which adds, at the head of the sequence, information on levels and on the number of partitions for each level. Denoted 600 is one such example that expresses a fuzzy hash 60 in a sequence form.

The fuzzy hash storage unit 104 of Fig. 1 stores fuzzy hashes calculated by the fuzzy hash calculation unit 122 in the form of a fuzzy hash management table 62. The fuzzy hash management table 62 manages a list of file names and the associated fuzzy hashes by attaching IDs to them. It is seen from Fig. 6 that a fuzzy hash for a file "C:¥aaa.txt", for example, is "t_max: (231d, 3412), t_max-1: (14f3, 90aa; 56b2, 9563, 744c), ..."

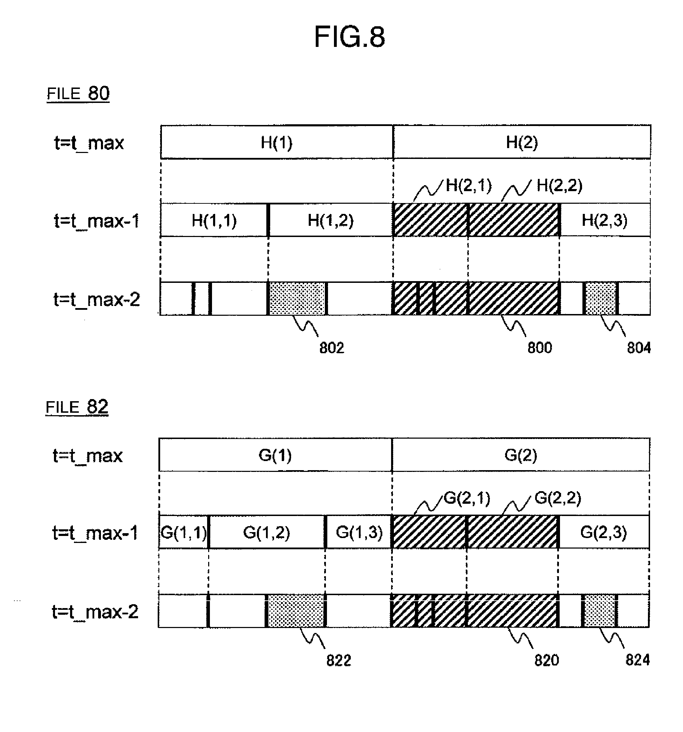

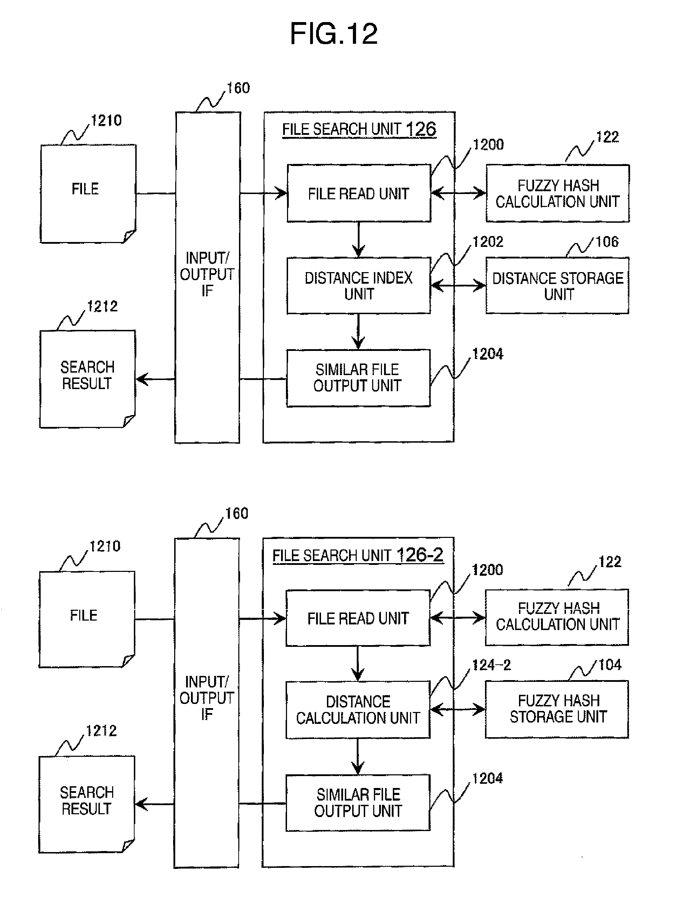

Further, the fuzzy hash management table 62 may hold information on the locations and length in a digital sequence of individual divided pieces of data corresponding to the partition hashes making up each of the fuzzy hashes. The use of these information, as explained later with reference to Fig. 8, makes it possible to calculate the length of identical portions in files from matching portions of fuzzy hashes, allowing for identification of matching portions in the files and for more accurate calculation of distances. Further, with these information, a file search unit 126 to be described by referring to Fig. 12 can not only output files similar to a target file but also identify which parts of the files match.

In a general file system attributes of a file are managed by a folder containing that file. The fuzzy hash storage unit 104 may manage in each folder the fuzzy hash management table 62 together with the file attributes. If an expansion area 640 to which external data can be added exists on the same file system to which belongs a file 64 whose fuzzy hash has been calculated, the fuzzy hash can be written into the expansion area 640. These methods obviate the need for the fuzzy hash management table 62.

In this embodiment, for quick search for similar files distances between fuzzy hashes are calculated beforehand by the distance calculation unit 124 and stored in the distance storage unit 106. To achieve this objective, the control unit 110, when a fuzzy hash for a file is calculated and stored in the fuzzy hash storage unit 104, sends that fuzzy hash and other fuzzy hashes already stored in the fuzzy hash storage unit 104 to the distance calculation unit 124.

First, the configuration of the distance calculation unit 124 will be explained by referring to Fig. 7.

The distance calculation unit 124 has a fuzzy hash reading unit 702 to read two fuzzy hashes from the fuzzy hash storage unit 104; a partition hash matching unit 704 to identify a common partition hash from the fuzzy hashes read in; a comparison excluding unit 706 to determine if a partition hash of interest is to be excluded from the comparison operation; and a distance output unit 708 to calculate and output a distance between the fuzzy hashes based on the portions of partition hashes that have been determined to match. The distance calculation unit 124 also includes an initial setting unit 700 that sets parameters for the processing units 702, 704, 706 and 708.

In the calculation of a distance between fuzzy hashes, the processing units 700, 702, 704, 706, 708 store data temporarily in the memory 140 for processing, such as checking, editing and deletion.

The distance between the fuzzy hashes determined by the distance calculation unit 124 is stored in the distance storage unit 106 by the distance output unit 708. Alternatively, it may be presented to the user, for example, on a display through the input/output interface 160.

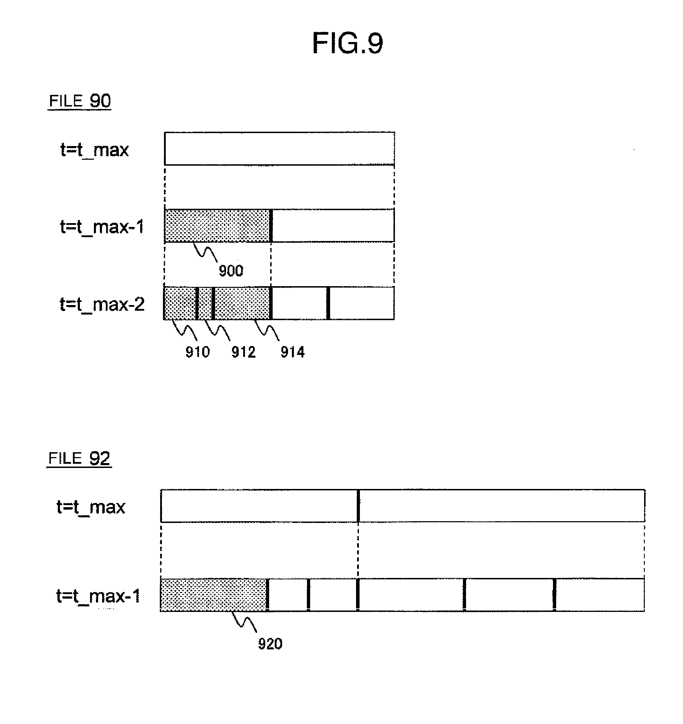

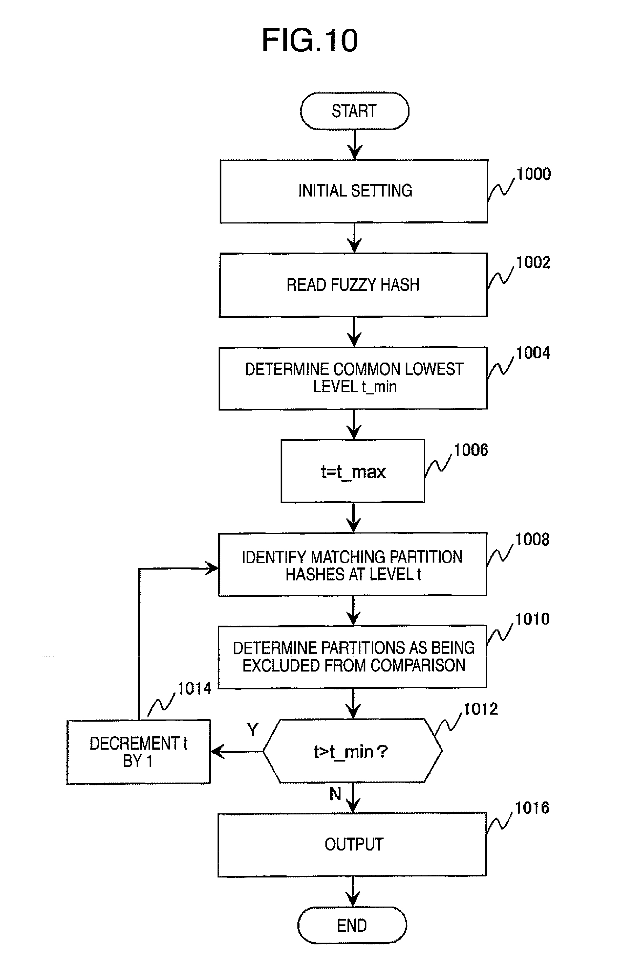

Before proceeding to describe the detailed operations of individual processing units shown in Fig. 7 by referring to Fig. 10, we will explain the method of calculating the distance between two hashes by referring to Fig. 8 and Fig. 9.

Fig. 8 shows one example method for calculating the distance between two fuzzy hashes of file 80 and file 82. $H(n)$, $G(n)$ and $H(m, n)$, $G(m, n)$ are partition hashes for divided pieces of data at levels t_max and t_max-1, respectively.

The partition hash matching unit 704 first compares partition hashes at the highest level t_max. In the example of Fig. 8, suppose the partition hashes $H(1)$ and $H(2)$ fail to match none of $G(1)$ and $G(2)$.

Next at level t_max-1, the partition hash matching unit 704 compares each of partition hashes $H(1, 1)$, $H(1, 2)$, $H(2, 1)$, $H(2, 2)$ and $H(2, 3)$ with $G(1, 1)$, $G(1, 2)$, $G(1, 3)$, $G(2, 1)$, $G(2, 2)$ and $G(2, 3)$ to see if there is any match. In the example of Fig. 8, suppose $H(2, 1)$ matches $G(2, 1)$ and that $H(2, 2)$ matches $G(2, 2)$. At this time, the comparison excluding unit 706 regards a set 800 of partition hashes $H(2, 1)$ and $H(2, 2)$ and a set 820 of partition hashes $G(2, 1)$ and $G(2, 2)$ as matching each other and removes them from those partition hashes that are to be compared subsequently.

With these sets of partitions removed, the partition hash matching unit 704 at the next level t_max-2 performs the comparison operation on those partition hashes not belonging to the partition hash sets 800 and 820.

Because matching partition hashes, if found at a high level, are removed from those partition hashes to be compared at lower levels as described above, the distance calculation can be made faster.

As a final step, the distance output unit 708 calculates a distance based on the total number of partition hashes at the lowest level t_max-2 and the number of partition hashes found to match by the above comparison. Here the distance is defined as the number of partition hashes that fail to match. In the example of Fig. 8, the total number of partition hashes for file 80 at level t_max-2 is 12 and the number of partition hashes for file 82 is 11. The output partition number is 19 for both files. Further, the partition hash 802 of file 80 is found to agree with the partition hash 822 of file 82, and the partition hash 804 with 824. The partition hash sets 800 and 820, that have been deemed equal at level t_max-1, have four partition hashes, so that the total number of common partition hashes is six. Therefore, when viewed from file 80, the number of partition hashes that differ from file 82 is six; and when viewed from file 82, the number of partition hashes that differ from file 80 is five. The distance output unit 708 outputs 6 as the distance from file 80 to file 82 and 5 as the distance from file 82 to file 80. Now the processing is complete. It should be noted that the distances in general are asymmetric, as shown in this case.

The method for finding common partition hashes for each level generally entails a large amount of computations. When, for example, a file is edited to change the order of sentences, there is a possibility that the order of partition hashes may also change. Therefore, to extract matching portions correctly requires partition hashes to be compared one by one.

As a distance calculation method that efficiently finds common portions by considering the possibility of partition hashes changing in their order, there is known a method that uses an edit graph, as described in a literature cited below. The edit graph method is an approach originally proposed to match character sequences against each other. If partition hashes are regarded as characters, the edit graph method can be applied to calculating the distance.

E. W. Myers: "An 0(ND) difference algorithm and its variations", Algorithmixa, 1, pp. 251-266 986.

This method will be described in detail by referring to the fuzzy hash management table 62 of Fig. 6. Consider an example case where the distance between a fuzzy hash "t_max: (231d, 3412), t_max-1: (14f3, 90aa; 56b2, 9563, 744c)" of a file "C:¥aaa.txt" and a fuzzy hash "t_max: (d794, 590c), t_max-1: (3245, e0f9; ff29; c908, eeab) of a file "C:¥bbb.doc" is to be calculated at level t_max-1 using an edit graph. The partition hashes "14f3", "90aa", "56b2", "9563" and "744c" are regarded as a five-letter sequence and the partition hashes "3245", "e0f9", "ff29", "c908" and "eeab" also as a five-letter sequence.

These sequences are matched against each other by the edit graph method to determine their distance.

When the fuzzy hash output unit 210 outputs a fuzzy hash using the aforementioned Bloom filter, it matches the Bloom filters against each other to calculate their distance. More precisely, commonality between the Bloom filters, that are generated from different sets of partition hashes, is evaluated (as by counting the number of bits whose values match), making it possible to determine how much commonality there is between the registered sets of partition hashes. For more detail, see the literature cited below.

Brin S., Davis J., Garcia-Molina H.: "Copy detection mechanisms for digital documents", Proceedings of the ACM SIGMOD annual conference, San Francisco, CA, May 1995.

Even with the use of the edit graph and the Bloom filter in calculating a distance, the calculation volume will increase depending on the number of partition hashes. To deal with this problem, this embodiment presents a method that focuses on the fact that the higher the level, the lower the probability of occurrence of a dividing point and which starts to find common portions from the highest level where there is the least number of partitions, moving one level down at a time, to minimize the number of partition hashes at lower levels that have to undergo the comparison operation, thereby reducing the calculation volume. This is a second aspect of this embodiment.

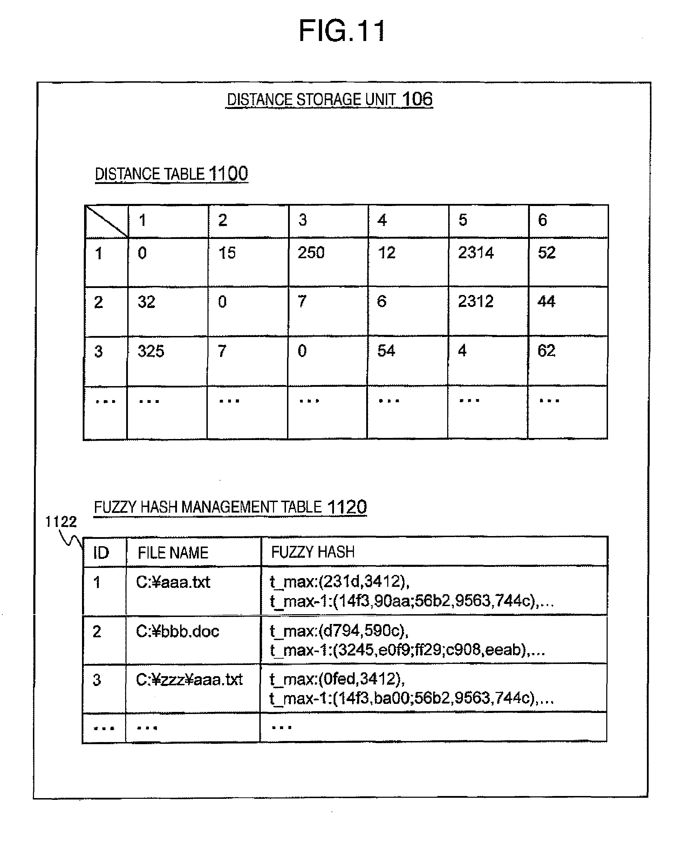

When the distance calculation is carried out as described above, since the numbers of partition hashes at the lowest level do not always agree, a fuzzy hash distance table 1100 stored in the distance storage unit 106, which will be explained referring to Fig. 11, may become an asymmetric matrix, as exemplified in Fig. 8. To realize a high-speed search for similar files, the distance table should preferably be a symmetric matrix, as explained later in Fig. 11.

To make the distance table a symmetric matrix, a method is conceivable which calculates the distance using the total number of differing partition hashes ranging from the highest level t_max to the lowest level, rather than counting them at only the lowest level. This is because the output partition numbers of two fuzzy hashes are equal and the numbers of differing partition hashes that are obtained by subtracting the number of partition hashes deemed common at all levels from the output partition number are also equal.

Further, although the above method calculates the distance based on the number of partition hashes, if the fuzzy hash management table 62 explained by referring to Fig. 6 holds information on the location and length in a digital sequence of divided data pieces corresponding to partition hashes, too, the length of matching portions of the file can also be calculated from the matching partition hashes, making it possible to identify the matching portions of the files and calculate the distance more precisely.

The method of calculating the distance between fuzzy hashes will be explained further by referring to Fig. 9.

Fig. 9 shows an example case where a file 90 is changed, through addition of some sentences thereto, into a file 92 which is longer than the file 90. Fuzzy hashes are calculated with the output partition number fixed at 8. The fuzzy hash calculation has reached a level t_max-2 for the file 90, whereas, for the file 92, it has reached only a level t_max-1. A divided piece of data 900 in the file 90 at the level t_max-1 matches a divided data piece 920 in the file 92 at the same level. The divided data piece 900 is further subdivided at level t_max-2 into divided pieces 910, 912, 914.

With the conventional method described in Patent Literature 1 and Non Patent Literature 1, only a set of partition hashes at the lowest level is output as a fuzzy hash. So, if the length of a file should change as by editing, as shown in Fig. 9, the set of partition hashes output as a fuzzy hash is highly likely to fall onto a different level. For example, when the conventional method has processed the file 90 down to a level t_max-2 and the file 92 down to a level t_max-1, a check needs to be made to see if divided data pieces 910, 912, 914 match divided data piece 920. In reality, since the data linking the divided data pieces 910, 912, 914 matches the divided data piece 920, the individual partition hashes do not match the divided piece 920. Therefore, in this case the conventional method cannot correctly calculate the distance between the fuzzy hashes.

On the other hand, this embodiment compares the fuzzy hashes at the same level and regards the minimum value of common level as a lowest level for use in the calculation of the distance (hereinafter referred to as a "common lowest level"). In the example of Fig. 9, although the file 90 is calculated down to the level t_max-2, the common lowest level is t_max-1. When the fuzzy hashes are compared at the level t_max-1, it can be decided that the partition hashes of the divided data pieces 900 and 920 agree, making it possible to correctly calculate the distance between the two fuzzy hashes. This is a third aspect of this embodiment.

A flow of the fuzzy hash distance calculation method will be explained by referring to Fig. 10, as well as Figs. 8 and 9, in connection with the associated operations of the devices shown in Fig. 7.

(Step 1000) The initial setting unit 700 executes settings for the processing units 702, 704, 706, 708, for example, allowing the distance calculation method, such as edit graph or Bloom filter, implemented by the distance output unit 708 to be selected.

The user can set the above items through the initial setting unit 700. Conversely, it is also possible to fix parts of the setting items so that they cannot be set by the initial setting unit 700. In the following description it is assumed that the items either set or fixed by the initial setting unit 700 are notified, as required, to the associated processing units by the initial setting unit 700 through the memory 140 or storage 100.

(Step 1002) The fuzzy hash reading unit 702 reads two fuzzy hashes from the fuzzy hash storage unit 104 and temporarily stores them in the memory 140. The fuzzy hashes to be read in are specified by the control unit 110 which also starts the fuzzy hash reading unit 702, when necessary. In addition, the control unit 110, when prompted by the user through the input/output interface 160, may read in fuzzy hashes specified by the user. When the fuzzy hash reading unit 702 has read in two fuzzy hashes and saved them in the memory 140, the processing moves to step 1004.

The storage 100 may be used as the destination in which to temporarily store the fuzzy hashes. In the following description, the word "memory 140", whenever it appears, also implies the storage 100.

(Step 1004) The fuzzy hash reading unit 702 calculates how many levels there are to each of the two fuzzy hashes on the memory 140 and determines a common lowest level t_min, the lowest of those levels common to two sets of levels (the lowest level of a product of two level sets). The fuzzy hash reading unit 702 temporarily stores the common lowest level t_min on the memory 140 before calling the partition hash matching unit 704.

The call-up operation may involve starting the target processing unit (if the processing unit of interest is already running, nothing is done) and notifying the processing unit of the destination in which the data temporarily saved in the memory 140 is to be stored, or picking up the data itself and sending it to the target processing unit. In the descriptions that follow, the call-up operation implies the operation described above.

(Step 1006) To identify common partition hashes from the fuzzy hashes, the partition hash matching unit 704 sets the level t to t_max and temporarily stores this value in the memory 140.

(Step 1008) The partition hash matching unit 704 identifies matching partition hashes in a partition hash set in level t as by the edit graph method explained in Fig. 8. Here in this step, those partition hashes that the comparison excluding unit 706 has recorded at step 1010 described later as the ones to be removed from the comparison operation are regarded as matching portions and excluded from comparison, thus reducing the calculation volume.

The partition hash matching unit 704 temporarily stores in the memory 140 information about which partition hashes are identical, before calling up the comparison excluding unit 706.

(Step 1010) For levels lower than a level where some partition hashes are newly determined by step 1008 to be identical between the two fuzzy hashes, the comparison excluding unit 706 records a set of those partition hashes at the lower levels that corresponds to the identical partition hashes as being excluded from comparison. This record is temporarily stored in the memory 140.

(Step 1012) The comparison excluding unit 706 checks whether the current level t is greater than the common lowest level t_min stored in the memory 140. If so, the processing moves to step 1014 where it decrements t by one and repeats the operation from step 1008 onward. If not, the comparison excluding unit 706 calls the distance output unit 708 before jumping to step 1016.

(Step 1016) The distance output unit 708 calculates the distance from the number of common partition hashes on the memory by the method explained in Fig. 8 and Fig. 9. The distance output unit 708 outputs the calculated distance to the distance storage unit 106 and/or the input/output interface 160. Which method is to be adopted may be determined by the user through the initial setting unit 700.

In the aforementioned flow, the process of finding common partition hashes has been described to start from the highest level t_max where there is the least number of partitions and move one level down at a time to minimize the number of partition hashes at lower levels that need to be compared, thereby reducing the calculation volume. However, if the algorithm, such as edit graph and Bloom filter, to identify common portions is able to run at high speed because of sufficient computation capability of CPU 120, the initial value t can be set to less than t_max. At this time the initial setting unit 700 at step 1000 sets the initial value t0_max, and at step 1006 t is replaced with

$$t = \max(t0\_max, t\_min)$$

If the common lowest level t_min is greater than t0_max, common hashes are searched directly at level t_min.

Further, it is possible to adopt a method that matches the fuzzy hashes against each other at only the common lowest level. In that case, there is no need for the initial setting unit 700 to hold the threshold. Nor does the distance calculation unit 124 need to have the comparison excluding unit 706.

In the above, we have explained the method of calculating fuzzy hashes and the method and apparatus for calculating distances between fuzzy hashes by referring to Fig. 1 through Fig. 10. For quick finding of similar files, this embodiment calculates distances for all combinations of fuzzy hashes beforehand and stores them in the distance storage unit 106. The control unit 110 sends files stored in the file storage unit 102 to the fuzzy hash calculation unit 122 and then transfers calculated fuzzy hashes from the fuzzy hash storage unit 104 to the distance calculation unit 124 where distances are calculated for all combinations of files. The control unit 110 then updates the distance storage unit 106. Fig. 11 shows an example configuration of the distance storage unit 106 in which the distances thus calculated are stored.

The distance storage unit 106 has a distance table 1100 for managing the distances between fuzzy hashes and a fuzzy hash management table 1120 for managing the relations between fuzzy hashes and files. In the example of Fig. 11, the fuzzy hash management table 1120 identifies a combination of a file and its fuzzy hash by an ID 1122. The distance table 1100 represents a list of distances by using the IDs 1122 instead of fuzzy hashes themselves. The fuzzy hash management table 1120 may also include information, such as locations of divided pieces of data corresponding to individual partition hashes that make up a fuzzy hash.

Provision of the distance table 1100 and the fuzzy hash management table 1120 makes it possible to quickly find a fuzzy hash close to a given unknown fuzzy hash. The high speed search is performed as follows. When an unknown fuzzy hash is given, some fuzzy hashes are picked up from the fuzzy hash management table 1120 and their distances from the given fuzzy hash are calculated. Next, the distance table 1100 is searched to find a distance value distribution similar to a distribution of the calculated distance values. Fuzzy hashes associated with the distance value distribution thus found can be identified from the distance table 1100 and then strictly examined to determine how close they are to the unknown fuzzy hash. Since this method performs comparison not for all fuzzy hashes but for only some representatives, a fuzzy hash closest to the unknown fuzzy hash can be found quickly. For more detail, see the following literature.

Edgar Chavez, Gonzalo Navarro, Ricardo Baeza-Yates and Jose L. Marroquin: "Searching in metric spaces", ACM Computing Surveys 33, 3, pp. 273-321, 2001.

It has generally been known that, to realize a high-speed search, the distance table 1100 is preferably a symmetric matrix. As explained earlier with reference to Fig. 8, the distance table 1100 may be made a symmetric matrix by counting the total number of differing partition hashes ranging from the highest level to the common lowest level, rather than calculating the distance from only the common lowest level.

In the example of Fig. 11, the distance table 1100 is presented in the form of a matrix and thus increases in size by the square of the number of fuzzy hashes, which tends to cause a huge increase in the storage capacity required. To reduce the capacity of the distance table 1100, the table may be built in a tree structure as proposed in a literature cited below.

Peter N. Yianilos: "Data structures and algorithms for nearest neighbor search in general metric spaces", ACM-SIAM Symposium on Discrete Algorithms (A Conference on Theoretical and Experimental Analysis of Discrete Algorithms), pp. 311-321, 1993.

The fuzzy hash management table 1120 is similar to the table 62 explained in Fig. 6 and manages a list of file names and fuzzy hashes. So, the distance storage unit 106 may reference the table 62 in the fuzzy hash storage unit 104 instead of the fuzzy hash management table 1120. It is noted, however, that when the table 62 is managed in each folder along with file attributes, or when a fuzzy hash is written into an expansion area 640 of a file 64 for which the fuzzy hash has been calculated, no fuzzy hash management table 62 exists, which requires the distance storage unit 106 to have the fuzzy hash management table 1120.

Fig. 12 shows an example configuration of the file search unit 126 that searches for similar files using information on distances stored in the distance storage unit 106.

The file search unit 126 outputs a set of files similar to a file 1210 as a search result 1212. The file search unit 126 has a file read unit 1200 to read the file 1210 through the input/output interface 160 to calculate a fuzzy hash in cooperation with the fuzzy hash calculation unit 122; a distance index unit 1202 to determine a fuzzy hash near the calculated fuzzy hash by using information stored in the distance storage unit 106; and a similar file output unit 1204 to output information on a file corresponding to the nearest fuzzy hash as a search result 1212 through the input/output interface 160.

For details of the search algorithm of the distance index unit 1202, see the literature cited above. In this embodiment, detailed explanations of the algorithm is omitted.

The file search unit 126 outputs the file similar to the file 1210 as the search result 1212. The number of similar files to be output as the search result 1212 can be set by the initial setting unit, not shown, in the file search unit 126. Further, if the fuzzy hash management table 1120 in the distance storage unit has information on the locations of divided pieces of data corresponding to partition hashes that make up a fuzzy hash, it is also possible to present which part of the similar file matches the file 1210 as the search result 1212.

Further, similar files can be searched without preparing the distance table 1100 in advance. The configuration of the file search unit that may be used in that case is shown at 126-2 in Fig. 12.

The file search unit 126-2 has the file read unit 1200 and the similar file output unit 1204, and also includes a distance calculation unit 124-2, in place of the distance index unit 1202, that determines a nearest fuzzy hash by using information stored in the fuzzy hash storage unit 104.

The distance calculation unit 124-2 has a similar configuration to the distance calculation unit 124 shown in Fig. 7. In the distance calculation unit 124-2, the processing unit corresponding to the distance calculation unit 124 of the distance calculation unit 124 reads all fuzzy hashes one by one from the fuzzy hash storage unit 104 and has the processing units 704, 706, 708 calculate the distances between these fuzzy hashes and the fuzzy hash of the file 1210. Further, the processing unit corresponding to the distance output unit 708 in the distance calculation unit 124 notifies the calculated, short fuzzy hashes to the similar file output unit 1204.

With this method using the distance calculation unit 124-2, the digital sequence feature amount calculation apparatus 10 does not need to have the distance storage unit 106. This method, though its search speed is slower than the file search unit 126, has the advantage of being able to reduce the capacity of the storage 100 because the distance storage unit 106 is not required.

With the method and devices shown in Fig. 1 through Fig. 12, even those files that could not be determined as similar by the conventional technique described in Patent Literature 1 and Non Patent Literature 1 can assume close fuzzy hash values, improving the possibility of these files being correctly determined as similar. This embodiment therefore allows similar files in PCs and servers to be searched more precisely. With this embodiment, redundant or overlapping portions of files stored in storages can be found with higher precision than is possible with the conventional technique, which in turn leads to a further reduction in storage capacity required.

EMBODIMENT 2

Fuzzy hashes have two characteristics: (1) they allow a similarity check among different files and (2) their size is small and fixed. To meet the characteristic (2), the conventional techniques of Patent Document 1 and Non Patent Document 1 adjust the level to keep the output size constant. This adjustment, however, often results in a distance between two fuzzy hashes failing to be correctly calculated when the length of a file has changed. To deal with this problem, Embodiment 1 has proposed a method which sets an output partition number beforehand and outputs, within a range not exceeding the output partition number, all partition hashes produced through division at various levels.

Either of these methods introduces some means to satisfy the requirement (2). It is noted, however, that the requirement (2) itself is a restraint intended to avoid fuzzy hashes imposing onerous burden on the storage capacity and that there may be cases where the requirement (2) may be eliminated, as when the storage capacity is sufficiently larger than files under consideration. In that case, the size of feature quantity can be increased in proportion to the file size, giving rise to an expectation that the similarity check accuracy will, because of increased volume of information, improve over the conventional techniques and Embodiment 1, both of which throw away some parts of information to make the output size conform to the fixed length under the restraint of (2).

Thus, Embodiment 2 provides a method of calculating a feature quantity of a digital sequence that excludes the requirement (2), and a similar file search method. This embodiment also offers an apparatus for implementing these methods.

In the description that follows, a feature quantity with the requirement (2) excluded is called a "variable fuzzy hash". It is "variable" because this feature quantity which is no longer restrained by the requirement (2) can be expanded in size according to the length of a file.

In the following, it will be made clear, by applying Fig. 1 through Fig. 12 to this embodiment as appropriate, that the variable fuzzy hash is superior in similarity check accuracy to the fuzzy hash of Embodiment 1 because the variable fuzzy hash is freed from the restraint of a fixed output size.

Fig. 1 shows a hardware configuration of the digital sequence feature amount calculation apparatus 10. The processing units provided in the digital sequence feature amount calculation apparatus 10 are the same as those of Embodiment 1. The fuzzy hash calculation unit 122 calculates variable fuzzy hashes instead of fuzzy hashes of Embodiment 1, the fuzzy hash storage unit 104 stores the variable fuzzy hashes instead of fuzzy hashes, and the distance calculation unit 124 calculates a distance using the variable fuzzy hashes instead of fuzzy hashes.

Fig. 2 shows an example configuration of the fuzzy hash calculation unit 122. The processing units provided in the fuzzy hash calculation unit 122 are the same as those of Embodiment 1. The data dividing unit 206 adopts a dividing method different from that of Embodiment 1 so that it can produce variable fuzzy hashes instead of fuzzy hashes.

For detailed explanation of this dividing method, an example flow chart of a variable fuzzy hash calculation method will be described by applying Fig. 4 to this embodiment.

(Step 400) This step is almost the same as step 400 of Embodiment 1. It is noted, however, that the initial setting unit 200, rather than setting the output partition number, sets an "output level" as a fixed value used for generating variable fuzzy hashes and for calculating distances using the variable fuzzy hashes. In Embodiment 1 the output partition number has been set to fix the output size, whereas in this embodiment the output level is introduced in place of the output partition number.

(Step 402) This step is the same as step 402 of Embodiment 1.

(Step 404) This step is the same as step 404 of Embodiment 1.

(Step 406) The data dividing unit 206, to divide normalized data on the memory 140, sets a level t at an output level t0 and temporarily saves this value in the memory 140. In finding dividing points, Embodiment 1 starts from the highest level t_max, moving one step down at a time. This embodiment determines the dividing points only at the output level t0.

(Step 408) This step is the same as step 408 of Embodiment 1.

(Step 410) There is no output partition number in this embodiment, so the processing moves directly to step 414, without comparing the partition number.

(Step 414) This step is the same as step 414 of Embodiment 1.

(Step 416) This step is the same as step 416 of Embodiment 1.

(Step 418) The fuzzy hash output unit 210 outputs a set of partition hashes from the memory 140 as is, as the variable fuzzy hashes.

It is noted that in this embodiment, too, the output size can be adjusted by using Bloom filters.

With the above steps taken, the variable fuzzy hash calculation process is complete.

Fig. 5 shows an example flow chart of the dividing point calculation method. This method is the same as that of Embodiment 1.

Fig. 6 shows an example of the fuzzy hash storage method. This method is almost the same as that of Embodiment 1. It is noted, however, that since the variable fuzzy hash is variable in length, if the variable fuzzy hash is too long, it may not be able to be embedded directly in a file or folder. In this embodiment therefore, it is preferable to introduce a fuzzy hash management table 62.

Fig. 7 shows an example configuration of the distance calculation unit. The distance calculation unit 124 comprises an initial setting unit 700 to set an output level t0 and the like, a fuzzy hash reading unit 702 to read variable fuzzy hashes instead of fuzzy hashes, a partition hash matching unit 704 to determine identical portions between the variable fuzzy hashes, and a distance output unit 708 to calculate a distance from information on the identical portions and output the calculated distance. Unlike Embodiment 1, the variable fuzzy hashes of this embodiment are made up of a single level (output level), so that the distance calculation unit 124 does not need to have a comparison excluding unit 706.

For detailed explanation of a method of calculating a distance between variable fuzzy hashes, an example flow chart will be described by applying Fig. 10 to this embodiment.

(Step 1000) This step is almost the same as step 1000 of Embodiment 1, except that the initial setting unit 700 does not make any setting on the comparison excluding unit 706.

(Step 1002) This step is the same as step 1002 of Embodiment 1.

(Step 1004) The fuzzy hash reading unit 702 does nothing in this step but calls up the partition hash matching unit 704 before jumping to step 1008.

(Step 1006) This step does not exist in this embodiment.

(Step 1008) The partition hash matching unit 704 identifies matching portions between two sets of partition hashes, each set forming a variable fuzzy hash. The partition hash matching unit 704 temporarily stores in the memory 140 information about which partition hashes are identical, before calling up the distance output unit 708. It then jumps to step 1016.

(Step 1010 to step 1014) These steps do not exist in this embodiment.

(Step 1016) This step is the same as step 1016 of Embodiment 1.

As described above, in the calculation of a distance between variable fuzzy hashes, because the variable fuzzy hashes have only one level, there is no possibility of the variable fuzzy hashes being compared at two different levels. Therefore, this embodiment is highly likely to be able to calculate the distance more precisely than the conventional techniques - which may not be able to make correct judgment on similarity when file modifications or the like result in a fuzzy hash being expanded in size to change its level - and also Embodiment 1 which has reduced the possibility of occurrence of this undesired phenomenon by using a set of partition hashes at a plurality of levels. It should be noted, however, that since the variable fuzzy hash changes in length according to the file size, this may place onerous burden on the storage capacity.

Fig. 11 shows an example configuration of the distance storage unit 106. This is the same as in Embodiment 1.

Fig. 12 shows an example configuration of the file search unit 126. This is the same as in Embodiment 1.

The methods and apparatus described in Fig. 1 to Fig. 12 increase the possibility that even those files, for which similarity judgment cannot be made by the conventional techniques or by Embodiment 1, can be checked for their similarity. Further, this embodiment makes it possible to search similar files in PCs and servers more precisely than the conventional techniques. This embodiment also enables redundant or overlapping portions in a file in a storage to be found with higher precision. Although the above descriptions have been made by taking up example cases, it will now be apparent that the present invention is not limited to these examples but that various changes and modifications may be made to the invention without departing from the spirit of the invention and the scope of the appended claims.

REFERENCE SIGNS LIST

| | |
|---|---|
| 10: | Digital sequence feature amount calculation apparatus |
| 100: | Storage |
| 102: | File storage unit |
| 104: | Fuzzy hash storage unit |
| 106: | Distance storage unit |
| 110: | Control unit |
| 120: | CPU |
| 122: | Fuzzy hash calculation unit |
| 124: | Distance calculation unit |
| 126: | File search unit |
| 140: | Memory |
| 160: | Input/output interface |
| 180: | Hub |
| 200: | Initial setting unit |
| 202: | File read unit |
| 204: | Normalization unit |
| 206: | Data dividing unit |
| 208: | Partition hash calculation unit |
| 210: | Fuzzy hash output unit |
| 30: | Digital sequence |
| 32: | Hash function |
| 36: | Fuzzy hash |
| 300: | Point being considered as a possible dividing point |
| 302: | Digital sequence to be handed over to hash function |
| 340: | t endmost bits of hash value |
| 60: | Structure of fuzzy hash |
| 62: | Fuzzy hash management table |
| 64: | File |
| 600: | One expression of fuzzy hash |
| 640: | Expansion area |
| 650: | Fuzzy hash |
| 700: | Initial setting unit |
| 702: | Fuzzy hash reading unit |
| 704: | Partition hash matching unit |
| 706: | Comparison excluding unit |
| 708: | Distance output unit |
| 800, 820: | Partition hashes excluded from comparison |
| 802, 822: | Identical partition hashes |
| 804, 824: | Identical partition hashes |
| 900, 910, 912, 914, 920: | Divided pieces of data |
| 1100: | Distance table |
| 1120: | Fuzzy hash management table |
| 1122: | ID |
| 124-2: | Distance calculation unit |
| 126-2: | File search unit |

(continued)

| 1200: | File read unit |
| 1202: | Distance index unit |
| 1204: | Similar file output unit |
| 1210: | File |
| 1212: | Search result |

**Claims**

1. A method of calculating a feature amount of a digital sequence comprising the steps of:

   setting a level by which to determine whether or not the digital sequence can be divided;
   inputting into a first function a partition sequence, a part of the digital sequence;
   checking an output value of the first function against the set level to see if the digital sequence can be divided at a position of the partition sequence and, if so, determining that position as a dividing point;
   repeating, until the number of the determined dividing points exceeds a preset number, the level setting step, the step of inputting the partition sequence into the first function and the step of determining the dividing point;
   dividing the digital sequence at the dividing points at each level, the dividing points being determined by the dividing point determination step; and
   inputting each of a plurality of divided pieces of data obtained by the digital sequence dividing step into a second function and outputting a set of output values as the feature amount.

2. The method of calculating a digital sequence feature amount according to claim 1, wherein the dividing point determination step has a step of extracting a bit sequence of a length determined by the level from the output value of the first function, deciding that the digital sequence can be divided at the position of the partition sequence if the extracted bit sequence agrees with a predetermined bit sequence, and taking a starting point of the partition sequence as the dividing point.

3. The method of calculating a digital sequence feature amount according to claim 2, wherein the dividing point determination step has a step of not taking the starting point of the partition sequence as the dividing point if an interval between the dividing point and another dividing point determined by the dividing point determination step is smaller than a predetermined value.

4. The method of calculating a digital sequence feature amount according to claim 1, wherein the dividing point determination step has a step of deciding that the digital sequence cannot be divided at the position of the partition sequence if a bit sequence included in the output value of the first function and having a length determined by the level does not agree with a predetermined bit sequence.

5. The method of calculating a digital sequence feature amount according to claim 1, wherein the step of outputting a set of output values of the second function as the feature amount has a step of generating Bloom filters at each of the levels from the set of output values of the second function and using a set of the generated Bloom filters as the feature amount.

6. The method of calculating a digital sequence feature amount according to claim 2, wherein, if the bit sequence of a length determined by the level is longer than the output value of the first function, the repetition step has a step of not inputting the partition sequence into the first function but outputting an indication that there is no dividing point at the current level.

7. A method of calculating a distance between feature amounts of digital sequences, comprising the steps of:

   determining the lowest level of a product of two level sets of the feature amounts, each of the feature amounts having a tree structure;
   setting a level at which to start a distance calculation;
   comparing sets of elements in the two feature amounts which belong to a specific level and whose commonality has not yet been determined and then identifying matching portions;
   excluding from comparison the matching portions from those feature amounts that belong to levels lower than the level at which the matching portions have been identified;
repeating the matching portion identifying step and the comparison excluding step by moving one level down at a time until the lowest level is reached; and
calculating a distance based on the number of those elements in the two feature amounts that fail to match.

8. The method of calculating a distance between feature amounts according to claim 7, wherein the matching portion identifying step has a step of regarding the elements making up the feature amounts as characters and applying a character sequence comparison algorithm to identify the matching portions.

9. The method of calculating a distance between feature amounts according to claim 7, wherein the distance calculating step has a step of outputting as the distance between the two feature amounts a difference at the lowest level between the number of elements and the number of matching elements in the two feature amounts.

10. The method of calculating a distance between feature amounts according to claim 7, wherein the distance calculating step has a step of outputting as the distance between the two feature amounts a difference between the total number of elements, counted from the level at which the distance calculation is started to the lowest level, and the number of matching elements in the two feature amounts.

11. The method of calculating a distance between feature amounts according to claim 7, wherein the distance calculation start level setting step has a step of setting the highest level of a product of two level sets of the feature amounts as the distance calculation start level.

12. The method of calculating a digital sequence feature amount according to claim 1, wherein the step of outputting a set of output values of the second function as the feature amount has a step of outputting, together with the values produced by the second function, information on the locations in the digital sequences of the divided pieces of data processed by the second function.

13. The method of calculating a distance between feature amounts according to claim 7, wherein when each of the feature amounts has information on the locations in the digital sequence, the distance calculation step calculates lengths of the matching portions from the information on the locations of the matching portions and determines the distance from the lengths of the digital sequences and the lengths of the matching portions.

14. A digital sequence feature amount calculation apparatus comprising:

a file storage unit in which to store files;
a feature amount calculation unit to calculate a feature amount of each file by the method claimed in claim 1;
a feature amount storage unit in which to store the feature amounts and file names corresponding to the feature amounts;
a distance calculation unit to calculate a distance between the feature amounts by the method claimed in claim 7;
a distance storage unit in which to store the calculated distance and the feature amounts and file names corresponding to the distance;
a control unit to send the files stored in the file storage unit to the feature amount calculation unit, store the calculated feature amounts in the feature amount storage unit, send the feature amounts stored in the feature amount storage unit successively to the distance calculation unit, and store the calculated distance in the distance storage unit; and
a file search unit to search for similar files;
wherein the file search unit comprises:

a file read unit to send a target file to the feature amount calculation unit;
a distance index unit to send a calculated feature amount of the target file to the distance storage unit, identify a predetermined number of those feature amounts which are closest to the feature amount of the target file, and determine a file name corresponding to each of the closest feature amounts; and
a similar file output unit to output the determined file names as a search result.

15. A digital sequence feature amount calculation apparatus comprising:

a file storage unit in which to store files;
a feature amount calculation unit to calculate a feature amount of each file by the method claimed in claim 1;

a feature amount storage unit in which to store the feature amounts and file names corresponding to the feature amounts;

a control unit to send the files stored in the file storage unit to the feature amount calculation unit and store the calculated feature amounts in the feature amount storage unit; and

a file search unit to search for similar files;

wherein the file search unit comprises:

a file read unit to send a target file to the feature amount calculation unit;

a distance calculation unit to calculate distances between the calculated feature amount of the target file and the feature amounts stored in the feature amount storage unit by the method claimed in claim 7, identify a predetermined number of those feature amounts which are closest to the feature amount of the target file, and determine a file name corresponding to each of the closest feature amounts; and

a similar file output unit to output the determined file names as a search result.

**16.** A digital sequence feature amount calculation apparatus comprising:

a file storage unit in which to store files;

a feature amount calculation unit to calculate a feature amount of each file by the method claimed in claim 12;

a feature amount storage unit in which to store the feature amounts, file names corresponding to the feature amounts and information on the locations of the divided pieces of data described in claim 12;

a distance calculation unit to calculate a distance between the feature amounts by the method claimed in claim 13;

a distance storage unit in which to store the calculated distances and the feature amounts and file names corresponding to the distances;

a control unit to send the files stored in the file storage unit to the feature amount calculation unit, store the calculated feature amounts in the feature amount storage unit, send the feature amounts stored in the feature amount storage unit successively to the distance calculation unit, and store the calculated distance in the distance storage unit; and

a file search unit to search for similar files;

wherein the file search unit comprises:

a file read unit to send a target file to the feature amount calculation unit;

a distance index unit to send the calculated feature amount of the target file to the distance storage unit, identify a predetermined number of those feature amounts which are closest to the feature amount of the target file, and determine a file name corresponding to each of the closest feature amounts; and

a similar file output unit to output as a search result the determined file names and the matching portions of the target file described in claim 14 and the determined files.

**17.** A digital sequence feature amount calculation apparatus comprising:

a file storage unit in which to store files;

a feature amount calculation unit to calculate a feature amount of each file by the method claimed in claim 12;

a feature amount storage unit in which to store the feature amounts, file names corresponding to the feature amounts and information on the locations of the divided pieces of data described in claim 12;

a control unit to send the files stored in the file storage unit to the feature amount calculation unit and store the calculated feature amounts in the feature amount storage unit; and

a file search unit to search for similar files;

wherein the file search unit comprises:

a file read unit to send a target file to the feature amount calculation unit;

a distance calculation unit to calculate distances between the calculated feature amount of the target file and the feature amounts stored in the feature amount storage unit by the method claimed in claim 13, identify a predetermined number of those feature amounts which are closest to the feature amount of the target file, and determine a file name corresponding to each of the closest feature amounts; and

a similar file output unit to output as a search result the determined file names and the matching portions of the target file described in claim 15 and the determined files.

**18.** A method of calculating a feature amount of a digital sequence, comprising the steps of:

inputting a part of the digital sequence at a preset level into a first function;

based on an output value of the first function, determining a dividing point in the digital sequence at the preset level;

dividing the digital sequence at the dividing points, the dividing points being determined at the preset level by the dividing point determination step; and

inputting into a second function each of the divided pieces of data obtained at the preset level by the digital sequence dividing step.

19. The method of calculating a feature amount of a digital sequence according to claim 18, further comprising the steps of:

comparing those portions of the feature amounts whose commonality has not yet been determined to identify matching portions; and

calculating a distance based on the number of elements in the feature amounts and the number of matching elements.

# FIG.1

DIGITAL SEQUENCE FEATURE AMOUNT CALCULATION APPARATUS 10

STORAGE 100

102

FILE STORAGE UNIT

110

CONTROL UNIT

122

FUZZY HASH
CALCULATION UNIT

104

FUZZY HASH
STORAGE UNIT

124

DISTANCE
CALCULATION UNIT

106

DISTANCE STORAGE
UNIT

126

FILE SEARCH UNIT

140

MEMORY

120

CPU

180

160

INPUT/OUTPUT INTERFACE

# FIG.2

FILE STORAGE UNIT /102

FUZZY HASH CALCULATION UNIT **122**

FILE READ UNIT /202

NORMALIZATION UNIT /204

MEMORY /140

DATA DIVIDING UNIT /206

INITIAL SETTING UNIT /200

PARTITION HASH CALCULATION UNIT /208

FUZZY HASH OUTPUT UNIT /210

FUZZY HASH STORAGE UNIT /104

INPUT/OUTPUT INTERFACE /160

# FIG.3

DIGITAL SEQUENCE 30

HASH FUNCTION 32

t_max BITS

HASH VALUE 34

$\cdots$ | 00$\cdots$0

$\overset{340}{\frown}$

$\leftarrow$ t $\rightarrow$

LEVEL

$\overset{30}{\frown}$

| | | |
|---|---|---|
| t = t_max | H(1) | H(2) |

| | | | | | |
|---|---|---|---|---|---|
| t = t_max-1 | H(1,1) | H(1,2) | H(2,1) | H(2,2) | H(2,3) |

t = t_max-2

FUZZY HASH 36: t_max:(H(1), H(2)),
t_max-1:(H(1,1),H(1,2);H(2,1),H(2,2),H(2,3)),$\cdots$

# FIG.4

```
                    ┌──────────┐
                    │  START   │
                    └────┬─────┘
                         ▼
        ┌─────────────────────────────┐
        │      INITIAL SETTING        │  ∿ 400
        └──────────────┬──────────────┘
                       ▼
        ┌─────────────────────────────┐
        │         READ FILE           │  ∿ 402
        └──────────────┬──────────────┘
                       ▼
        ┌─────────────────────────────┐
        │         NORMALIZE           │  ∿ 404
        └──────────────┬──────────────┘
                       ▼
              ┌─────────────────┐
              │    t=t_max      │  ∿ 406
              └────────┬────────┘
                       ▼
        ┌─────────────────────────────┐
        │   CALCULATE DIVIDING        │  ∿ 408
    ──▶ │        POINT                │
    │   └──────────────┬──────────────┘
    │                  ▼
┌─────────────┐  N  ╱───────────────────────╲  ∿ 410
│ LOWER t BY 1│ ◀──┤   HAS PARTITION NUMBER   │
└─────────────┘    │ EXCEEDED OUTPUT PARTITION │
   ∿ 412           │        NUMBER?            │
                   ╲───────────┬──────────────╱
                           Y   ▼
        ┌─────────────────────────────┐
        │        DIVIDE DATA          │  ∿ 414
        └──────────────┬──────────────┘
                       ▼
        ┌─────────────────────────────┐
        │   CALCULATE PARTITION HASH  │  ∿ 416
        └──────────────┬──────────────┘
                       ▼
        ┌─────────────────────────────┐
        │          OUTPUT             │  ∿ 418
        └──────────────┬──────────────┘
                       ▼
                 ┌──────────┐
                 │   END    │
                 └──────────┘
```

# FIG.5

START

p = 0 ～500

READ pTH TO p+K-1 FROM NORMALIZED DATA ～502

APPLY HASH FUNCTION ～504

CAN CURRENT POINT BECOME DIVIDING POINT? ～506

N

Y

IS WIDTH OF DIVIDED DATA PIECE GREATER THAN MINIMUM PARTITION INTERVAL? ～508

N

Y

INCREMENT p BY 1 ～514

STORE POSITION OF DIVIDING POINT IN MEMORY ～510

N

IS p+K-1 TAIL END OF NORMALIZED DATA? ～512

Y

END

# FIG.6

FUZZY HASH <u>60</u>

LEVEL t_max        H(1)             H(2)

LEVEL t_max-1    H(1,1)   H(1,2)    H(2,1)   H(2,2)   H(2,3)

,600

(H(1), H(2)), (H(1,1),H(1,2);H(2,1),H(2,2),H(2,3)),···

FUZZY HASH MANAGEMENT TABLE <u>62</u>

| ID | FILE NAME | FUZZY HASH |
|---|---|---|
| 1 | C:¥aaa.txt | t_max:(231d,3412),<br>t_max-1:(14f3,90aa;56b2,9563,744c),... |
| 2 | C:¥bbb.doc | t_max:(d794,590c),<br>t_max-1:(3245,e0f9;ff29;c908,eeab),... |
| 3 | C:¥zzz¥aaa.txt | t_max:(0fed,3412),<br>t_max-1:(14f3,ba00;56b2,9563,744c),... |
| ... | ... | ... |

,650

FUZZY HASH

,640

FILE <u>64</u>

# FIG.7

FUZZY HASH STORAGE UNIT — 104

DISTANCE CALCULATION UNIT 124

FUZZY HASH READ UNIT — 702

MEMORY — 140

PARTITION HASH MATCHING UNIT — 704

INITIAL SETTING UNIT — 700

COMPARISON EXCLUDING UNIT — 706

DISTANCE OUTPUT UNIT — 708

DISTANCE STORAGE UNIT — 106

INPUT/OUTPUT INTERFACE — 160

# FIG.8

FILE **80**

| t=t_max | H(1) | | H(2) | | |
|---|---|---|---|---|---|

H(2,1)　H(2,2)

| t=t_max-1 | H(1,1) | H(1,2) | | | H(2,3) |

| t=t_max-2 | | | | | |

802　　　　800　　　804

FILE **82**

| t=t_max | G(1) | | G(2) | | |
|---|---|---|---|---|---|

G(2,1)　G(2,2)

| t=t_max-1 | G(1,1) | G(1,2) | G(1,3) | | | G(2,3) |

| t=t_max-2 | | | | | |

822　　　　820　　　824

# FIG.9

FILE 90

t=t_max

t=t_max-1

900

t=t_max-2

910    912    914

FILE 92

t=t_max

t=t_max-1

920

# FIG.10

START

INITIAL SETTING ~1000

READ FUZZY HASH ~1002

DETERMINE COMMON LOWEST
LEVEL t_min ~1004

t=t_max ~1006

IDENTIFY MATCHING PARTITION
HASHES AT LEVEL t ~1008

DETERMINE PARTITIONS AS BEING
EXCLUDED FROM COMPARISON ~1010

DECREMENT t
BY 1 ~1014

t>t_min ? ~1012

Y

N

OUTPUT ~1016

END

30

# FIG.11

## DISTANCE STORAGE UNIT 106

### DISTANCE TABLE 1100

|  | 1 | 2 | 3 | 4 | 5 | 6 |
|---|---|---|---|---|---|---|
| 1 | 0 | 15 | 250 | 12 | 2314 | 52 |
| 2 | 32 | 0 | 7 | 6 | 2312 | 44 |
| 3 | 325 | 7 | 0 | 54 | 4 | 62 |
| ... | ... | ... | ... | ... | ... | ... |

### FUZZY HASH MANAGEMENT TABLE 1120

1122

| ID | FILE NAME | FUZZY HASH |
|---|---|---|
| 1 | C:¥aaa.txt | t_max:(231d,3412),<br>t_max-1:(14f3,90aa;56b2,9563,744c),... |
| 2 | C:¥bbb.doc | t_max:(d794,590c),<br>t_max-1:(3245,e0f9;ff29;c908,eeab),... |
| 3 | C:¥zzz¥aaa.txt | t_max:(0fed,3412),<br>t_max-1:(14f3,ba00;56b2,9563,744c),... |
| ... | ... | ... |

# FIG.12

**INTERNATIONAL SEARCH REPORT**

| International application No. |
| --- |
| PCT/JP2011/052097 |

**A. CLASSIFICATION OF SUBJECT MATTER**
*G06F12/00*(2006.01)i

According to International Patent Classification (IPC) or to both national classification and IPC

**B. FIELDS SEARCHED**

Minimum documentation searched (classification system followed by classification symbols)
G06F12/00

Documentation searched other than minimum documentation to the extent that such documents are included in the fields searched
| | | | |
| --- | --- | --- | --- |
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)
JSTPlus(JDreamII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2010-026790 A  (NEC Corp.), 04 February 2010 (04.02.2010), entire text (Family: none) | 1-19 |
| A | JP 2007-272540 A  (PFU Ltd.), 18 October 2007 (18.10.2007), entire text (Family: none) | 1-19 |
| A | JP 2002-259216 A  (Mitsubishi Electric Corp.), 13 September 2002 (13.09.2002), entire text (Family: none) | 1-19 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 01 March, 2011 (01.03.11) | 15 March, 2011 (15.03.11) |

| Name and mailing address of the ISA/<br>    Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010155333 A
- US 7272602 B
- WO 2006122086 A

**Non-patent literature cited in the description**

- **JESSE KORNBLUM.** Identifying almost identical files using context triggered piecewise hashing. *Digital Investigation,* 2006, vol. 3 S, 91-97
- **RICHARD M. KARP ; MICHAEL O. RABIN.** Pattern-matching algorithms. *IBM Journal of Research and Development,* vol. 31 (2), 249-260
- **B. BLOOM.** Space/Time Tradeoffs in Hash Coding with Allowable Errors. *Communications of the ACM,* vol. 13 (7), 422-426
- **BRIN S. ; DAVIS J. ; GARCIA-MOLINA H.** Copy detection mechanisms for digital documents. *Proceedings of the ACM SIGMOD annual conference,* May 1995
- **EDGAR CHAVEZ ; GONZALO NAVARRO ; RICARDO BAEZA-YATES ; JOSE L. MARROQUIN.** Searching in metric spaces. *ACM Computing Surveys,* 2001, vol. 33 (3), 273-321
- **PETER N. YIANILOS.** Data structures and algorithms for nearest neighbor search in general metric spaces. *ACM-SIAM Symposium on Discrete Algorithms (A Conference on Theoretical and Experimental Analysis of Discrete Algorithms,* 1993, 311-321